# EUROPEAN PATENT SPECIFICATION

(11) **EP 4 513 862 B1**
(45) Date of publication and mention of the grant of the patent: **22.07.2026**
(21) Application number: 23923786.0
(22) Date of filing: 22.11.2023
(51) Int. Cl.: G06F 1/16

(54) **DISPLAY METHOD, AND ELECTRONIC DEVICE AND STORAGE MEDIUM**
ANZEIGEVERFAHREN UND ELEKTRONISCHE VORRICHTUNG SOWIE SPEICHERMEDIUM
PROCÉDÉ D'AFFICHAGE, ET DISPOSITIF ÉLECTRONIQUE ET SUPPORT DE STOCKAGE

(30) Priority: 24.02.2023 CN 202310196597
(43) Date of publication of application: 26.02.2025
(73) Proprietor: Honor Device Co., Ltd., Shenzhen, Guangdong 518040 (CN)
(72) Inventor: ZHANG, Wenli, Shenzhen, Guangdong 518040 (CN); HAO, Qingtao, Shenzhen, Guangdong 518040 (CN); CHE, Yufeng, Shenzhen, Guangdong 518040 (CN); SUN, Li, Shenzhen, Guangdong 518040 (CN)
(74) Representative: MERH-IP Matias Erny Reichl Hoffmann Patentanwälte PartG mbB
(86) International application number: PCT/CN2023/133412
(87) International publication number: WO 2024/174623

(56) References cited:
- CN-A- 104 125 327
- CN-A- 104 346 030
- CN-A- 107 483 709
- CN-A- 111 464 698
- JP-A- 2013 161 331

## Description

This application claims priority to Chinese Patent Application No. 202310196597.0, filed with the China National Intellectual Property Administration on February 24, 2023 and entitled "DISPLAY METHOD, ELECTRONIC DEVICE, AND STORAGE MEDIUM".

### TECHNICAL FIELD

This application relates to the field of smart terminal technologies, and in particular, to a display method, an electronic device, and a storage medium.

### BACKGROUND

Screens of electronic devices such as a mobile phone are generally rectangular, and use scenarios of the mobile phone may be classified into a portrait use scenario and a landscape use scenario. When the use scenario of the mobile phone is a portrait use scenario, a screen display direction of the mobile phone is portrait display. When the use scenario of the mobile phone is a landscape use scenario, a screen display direction of the mobile phone is landscape display.

After an "auto-rotate screen" function on the electronic device is enabled, the electronic device determines a deflection angle of the electronic device in a sensor coordinate system by using a physical sensor such as an acceleration sensor and a gyroscope of the electronic device, and automatically rotates a screen display direction when determining that the deflection angle of the electronic device meets a specified condition, to switch from portrait display to landscape display, or switch from landscape display to portrait display.

However, the "auto-rotate screen" function based on the physical sensor sometimes does not meet an actual usage requirement of a user for the electronic device. For example, in some cases in which the user does not expect to rotate a screen display direction, the electronic device automatically rotates the screen display direction.
CN 104 346 030 A discloses a display direction switching method, wherein the method includes: determining a to-be-switched display direction of contents displayed on a screen after an electronic equipment is rotated; capturing a facial image by a front camera to determine a face position; detecting whether the to-be-switched direction is consistent with the face position or not; if so, switching the current display direction of the contents displayed on the screen according to the to-be-switched direction.
CN 111 464 698 A discloses a method for controlling an electronic device, wherein the method comprises the following steps: when a preset condition of automatic screen rotation is met, acquiring a front camera image of the electronic equipment; carrying out face recognition on the front camera image; based on the face recognition, it is determined whether to trigger a screen rotation.

### SUMMARY

To resolve the foregoing technical problem, embodiments of this application provide a display method, an electronic device, and a storage medium. According to this method, in a scenario in which a user lies on the side, a problem that landscape display of the electronic device does not meet a usage expectation of the user can be resolved.

According to a first aspect, this application provides a display method. The method is applied to an electronic device and includes: When the electronic device is in or enters a landscape side-standing state, the electronic device obtains a first landscape/portrait direction of the electronic device determined based on a face direction; and if the first landscape/portrait direction is a portrait direction, the electronic device sets a screen display direction of the electronic device to portrait display.

The first landscape/portrait direction is a landscape/portrait direction B, mentioned in the following embodiments, determined based on the face direction.

In this way, in a scenario in which a user lies on the side, the electronic device is still in portrait display, which is consistent with the face direction. This resolves a problem that landscape display of the electronic device does not meet a usage expectation of the user.

According to the first aspect, in some embodiments, that the electronic device obtains a first landscape/portrait direction of the electronic device determined based on a face direction includes: The electronic device obtains the face direction recognized based on image data collected by a front camera; and the electronic device determines the first landscape/portrait direction based on an included angle α between the face direction and a natural direction of the electronic device, where the natural direction of the electronic device is a direction from a lower end of the electronic device to an upper end, and the upper end is an end at which the front camera and a rear camera of the electronic device are located.

According to the first aspect or any implementation of the first aspect, in some embodiments, that the electronic device determines the first landscape/portrait direction based on an included angle between the face direction and a natural direction of the electronic device includes:
when α∈ (0°-β, 0°+β), the first landscape/portrait direction is a portrait direction at 0°;
when α∈ (90°-β, 90°+β), the first landscape/portrait direction is a landscape direction at 90°;
when α∈ (180°-β, 180°+β), the first landscape/portrait direction is a portrait direction at 180°; or
when α∈ (270°-β, 270°+β), the first landscape/portrait direction is a landscape direction at 270°, where
β indicates a direction recognition range threshold, and β is greater than 0° and less than 45°. β should be selected with reference to an angular resolution at which a chip platform used by the electronic device performs face direction detection.

According to the first aspect or any implementation of the first aspect, in some embodiments, that the electronic device determines the first landscape/portrait direction based on an included angle α between the face direction and a natural direction of the electronic device further includes:
when α∈ [β, 90°-β], α∈ [90°+β, 180°-β], α∈ [180°+β, 270°-β], or α∈ [270°+β, 360°-β], a value of the first landscape/portrait direction indicates unknown.

According to the first aspect or any implementation of the first aspect, in some embodiments, an angular resolution at which the chip platform used by the electronic device performs face direction recognition is 30°, and β=30°.

In this way, effective angle intervals for recognizing a face orientation are (-30°, 30°), (60°, 120°), (150°, 210°), and (240°, 300°), and boundary angle values of 30° away from left and right sides of a central axis, being 30°, 60°, 120°, 150°, 210°, 240°, 300°, and 330° (or referred to as -30°) do not fall into the effective angle intervals for recognizing the face orientation. Further, even if a face recognition result jitters among these boundary angle values, a phenomenon of frequent switching of landscape/portrait display does not occur.

When the angular resolution at which the chip platform used by the electronic device performs the face direction detection is 30°, that the electronic device determines the first landscape/portrait direction based on the included angle α between the face direction and the natural direction of the electronic device may be further implemented based on an axial algorithm. When α=0, the first landscape/portrait direction is the portrait direction at 0°. When α=90°, the first landscape/portrait direction is the landscape direction at 90°. When α=180°, the first landscape/portrait direction is the portrait direction at 180°. When α=270°, the first landscape/portrait direction is the landscape direction at 270°.

According to the first aspect or any implementation of the first aspect, in some embodiments, the method further includes: The electronic device obtains, when the electronic device is in or enters the landscape side-standing state, the image data collected by the front camera; and the electronic device performs face direction recognition based on the image data.

In this way, face recognition is performed only in a period in which the electronic device maintains the landscape side-standing state. This minimizes duration of continual detection of the face direction and reduces system power consumption.

According to the first aspect or any implementation of the first aspect, in some embodiments, that the electronic device performs face direction recognition based on the image data includes: if only one face is recognized based on the image data, performing face direction recognition on the one face.

In this way, the electronic device performs a face direction recognition operation only when recognizing one face, to avoid a problem that an incorrect recognition result causes incorrect screen rotation.

According to the first aspect or any implementation of the first aspect, in some embodiments, the method further includes: If no face is recognized or a plurality of faces are recognized based on the image data, or there is an abnormality in recognition, the electronic device determines that a value of the first landscape/portrait direction indicates unknown.

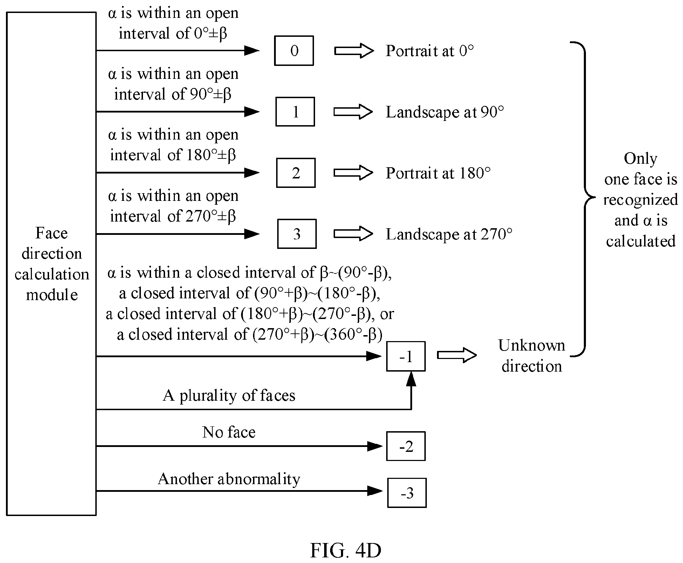

For example, the value of the first landscape/portrait direction may be -1, -2, or -3. Refer to FIG. 4D.

According to the first aspect or any implementation of the first aspect, in some embodiments, the method further includes: If the value of the first landscape/portrait direction indicates unknown, the electronic device maintains a current screen display direction of the electronic device.

In this way, in a scenario in which the user lies on the side and uses a mobile phone, if the mobile phone is in the landscape side-standing state, regardless of whether a face direction calculation module can determine a landscape/portrait state of the mobile phone, if no face is recognized or there is an abnormality in the face recognition, a landscape/portrait display decision-making module does not determine a screen display direction of the mobile phone based on a gravity direction, to avoid a case in which a screen display direction (namely, landscape display) of the mobile phone determined based on the gravity direction does not meet an expectation of the user (namely, portrait display) for landscape/portrait display when the user lies on the side.

According to the first aspect or any implementation of the first aspect, in some embodiments, the method further includes: If the first landscape/portrait direction is a landscape direction, the electronic device maintains a current screen display direction of the electronic device, where the landscape direction includes the landscape direction at 90° and the landscape direction at 270°.

When the first landscape/portrait direction is the landscape direction, the first landscape/portrait direction is independent of resolving a problem that landscape display does not meet the expectation of the user in the scenario in which the user lies on the side. In this case, the electronic device continues to maintain an original display direction.

According to the first aspect or any implementation of the first aspect, the method further includes: when the electronic device exits the landscape side-standing state or is in a landscape non-side-standing state, obtaining a second landscape/portrait direction of the electronic device determined based on a gravity direction; and determining the screen display direction of the electronic device based on the second landscape/portrait direction.

The second landscape/portrait direction is a landscape/portrait direction A, mentioned in the following embodiments, determined based on the gravity direction.

When the electronic device exits the landscape side-standing state or is in the landscape non-side-standing state, determining the screen display direction of the electronic device based on the gravity direction can meet most application scenarios.

According to the first aspect or any implementation of the first aspect, in some embodiments, that the electronic device obtains, when the electronic device is in or enters the landscape side-standing state, the image data collected by the front camera includes: When the electronic device is in or enters the landscape side-standing state, and there is a landscape/portrait auto-rotation requirement in a current scenario, the electronic device obtains the image data collected by the front camera.

In this way, the electronic device performs a face direction-based landscape/portrait detection operation only in a period in which the electronic device maintains the landscape side-standing state and when there is the landscape/portrait auto-rotation requirement in the current scenario. This reduces system power consumption while meeting a user requirement.

According to the first aspect or any implementation of the first aspect, in some embodiments, the image data collected by the front camera is obtained in a real-time sampling manner.

In this way, face direction-based landscape/portrait detection is performed in the real-time sampling manner, so that when the screen display direction is determined, a vote of the face direction can be provided in a timely manner.

According to the first aspect or any implementation of the first aspect, in some embodiments, the method further includes: When the electronic device exits the landscape side-standing state, or when there is no landscape/portrait auto-rotation requirement in the current scenario, the electronic device switches a sampling manner of obtaining the image data collected by the front camera from the real-time sampling manner to an interval sampling manner; and obtains, in the interval sampling manner, the image data collected by the front camera, and performs face direction recognition based on the image data.

If the face direction calculation module is disabled when the face direction calculation module does not need to perform the face direction-based landscape/portrait detection, there possibly is a problem that the face direction calculation module cannot output a detection result in a timely manner due to the face direction calculation module taking a relatively long time to start running. In this case, if the landscape/portrait display decision-making module waits for an output result of the face direction calculation module and then makes the fusion decision, landscape/portrait rotation experience during scenario switching becomes very slow. To resolve this problem and minimize high power consumption caused by the face direction-based landscape/portrait detection, even if the face direction calculation module does not need to report the detection result to the landscape/portrait display decision-making module, the face direction-based landscape/portrait detection is not stopped, but the face direction-based landscape/portrait detection is performed in an interval sampling manner.

According to the first aspect or any implementation of the first aspect, in some embodiments, that the electronic device switches a sampling manner of obtaining the image data collected by the front camera from the real-time sampling manner to an interval sampling manner includes:

When determining that the sampling manner of obtaining the image data collected by the front camera needs to be switched from real-time sampling to interval sampling, the electronic device obtains delay duration; and when timing reaches the delay duration, the electronic device switches the sampling manner of obtaining the image data collected by the front camera from the real-time sampling manner to the interval sampling manner.

In this way, when the sampling manner is switched from real-time sampling to interval sampling, a switching delay manner is used to avoid a problem that the face direction calculation module cannot output the detection result in a timely manner due to frequent operations of the user.

According to the first aspect or any implementation of the first aspect, in some embodiments, after the electronic device switches a sampling manner of obtaining the image data collected by the front camera from the real-time sampling manner to an interval sampling manner, the method further includes: When the electronic device enters or is in the landscape side-standing state and there is the landscape/portrait auto-rotation requirement in the current scenario, the electronic device immediately switches the sampling manner of obtaining the image data collected by the front camera from the interval sampling manner to the real-time sampling manner.

In this way, when the sampling manner is switched from real-time sampling to interval sampling, immediate switching or direct switching is used to avoid a problem that a vote of the face direction cannot be obtained due to untimely switching.

According to the first aspect or any implementation of the first aspect, in some embodiments, that the electronic device performs face direction recognition based on the image data includes: The electronic device determines, on an application processor side, whether it is necessary to fuse the first landscape/portrait direction determined based on the face direction and a second landscape/portrait direction determined based on a gravity direction, to determine the screen display direction of the electronic device; or the electronic device determines, on a coprocessor side, whether it is necessary to fuse the first landscape/portrait direction determined based on the face direction and a second landscape/portrait direction determined based on a gravity direction, to determine the screen display direction of the electronic device.

When performing face direction fusion determining on the application processor side, the electronic device has better architecture expansibility. When performing face direction fusion determining for the image data on the coprocessor side, the electronic device has lower power consumption.

According to the first aspect or any implementation of the first aspect, in some embodiments, the electronic device includes a landscape/portrait direction calculation module and a face direction calculation module; and that when the electronic device is in or enters a landscape side-standing state, the electronic device obtains a first landscape/portrait direction of the electronic device determined based on a face direction includes: When the landscape/portrait direction calculation module determines that a posture of the electronic device is the landscape side-standing state, the electronic device enables the face direction calculation module, obtains image data collected by a front camera, recognizes the face direction based on the image data, and determines the first landscape/portrait direction of the electronic device based on the face direction; and the electronic device disables the face direction calculation module.

In this way, the face direction calculation module is enabled only when it is necessary to query the face direction-based landscape/portrait state, which greatly reduces system power consumption.

According to a second aspect, an embodiment of this application provides an electronic device. The electronic device includes one or more processors; a memory; and one or more computer programs, the one or more computer programs are stored in the memory, and when the computer programs are executed by the one or more processors, the electronic device is enabled to perform the display method according to the first aspect and any implementation of the first aspect.

The second aspect and any implementation of the second aspect respectively correspond to the first aspect and any implementation of the first aspect. For technical effects corresponding to the second aspect and the any implementation of the second aspect, refer to technical effects corresponding to the first aspect and any implementation of the first aspect. Details are not described herein again.

According to a third aspect, an embodiment of this application provides a computer-readable storage medium. The computer-readable storage medium includes a computer program, and when the computer program is run on an electronic device, the electronic device is enabled to perform the display method according to the first aspect and any implementation of the first aspect.

The third aspect and any implementation of the third aspect respectively correspond to the first aspect and any implementation of the first aspect. For technical effects corresponding to the third aspect and any implementation of the third aspect, refer to technical effects corresponding to the first aspect and any implementation of the first aspect. Details are not described herein again.

According to a fourth aspect, an embodiment of this application provides a computer program product, including a computer program. When the computer program is run, a computer is enabled to perform the display method according to the first aspect or any implementation of the first aspect.

The fourth aspect and any implementation of the fourth aspect respectively correspond to the first aspect and any implementation of the first aspect. For technical effects corresponding to the fourth aspect and any implementation of the fourth aspect, refer to technical effects corresponding to the first aspect and any implementation of the first aspect. Details are not described herein again.

According to a fifth aspect, this application provides a chip, and the chip includes a processing circuit and a transceiver pin. The transceiver pin and the processing circuit communicate with each other by using an internal connection path, and the processing circuit performs the display method according to the first aspect or any implementation of the first aspect, to control a receive pin to receive a signal, and control a transmit pin to send a signal.

The fifth aspect and any implementation of the fifth aspect respectively correspond to the first aspect and any implementation of the first aspect. For technical effects corresponding to the fifth aspect and any implementation of the fifth aspect, refer to technical effects corresponding to the first aspect and any implementation of the first aspect. Details are not described herein again.

### BRIEF DESCRIPTION OF DRAWINGS

FIG. 1 shows an example of an application scenario;
FIG. 2 shows an example of an application scenario;
FIG. 3A is a schematic diagram of determining a screen display direction based on a gravity direction;
FIG. 3B shows an example of a landscape/portrait state of a mobile phone;
FIG. 3C shows an example of an output value of a landscape/portrait direction calculation module;
FIG. 4A is a schematic diagram of determining a screen display direction based on a gravity direction and a face direction;
FIG. 4B shows an example of a face direction;
FIG. 4C shows an example of a correspondence between a landscape/portrait state of a mobile phone and an included angle between a face direction and a natural direction of the mobile phone;
FIG. 4D shows an example of an output value of a face direction calculation module;
FIG. 4E is a diagram of logic of making a decision on a screen display direction by a landscape/portrait display decision-making module;
FIG. 5 is a schematic diagram of determining a screen display direction based on a gravity direction, a face direction, and a landscape side-standing state;
FIG. 6 is a schematic diagram of a mobile phone in a landscape side-standing state;
FIG. 7 is a diagram of logic of making a decision on a screen display direction by a landscape/portrait display decision-making module according to an embodiment of this application;
FIG. 8A is a schematic diagram of determining a screen display direction based on a gravity direction, a face direction, and a landscape side-standing state;
FIG. 8B shows an example of an output value of a landscape/portrait direction calculation module;
FIG. 8C is a diagram of logic of making a decision on a screen display direction by a landscape/portrait display decision-making module according to an embodiment of this application;
FIG. 9 is a schematic diagram of an example of module interaction;
FIG. 10A is a schematic diagram of an example of module interaction;
FIG. 10B is a schematic diagram of an example of module interaction;
FIG. 11A is a diagram of an example of processing logic of a face direction calculation module;
FIG. 11B is a schematic diagram of switching a sampling detection mode of a face direction calculation module;
FIG. 12 is a schematic diagram of an example of a hardware structure of an electronic device;
FIG. 13A is a schematic diagram of an example of module interaction; and
FIG. 13B is a schematic diagram of an example of module interaction.

### DESCRIPTION OF EMBODIMENTS

The technical solutions of the embodiments of this application are clearly and completely described below with reference to the accompanying drawings of the embodiments of this application. Clearly, the described embodiments are some rather than all of the embodiments of this application. All other embodiments obtained by persons of ordinary skill in the art based on the embodiments of this application without creative efforts shall fall within the protection scope of this application.

In this specification, the term "and/or" is merely used to describe an association relationship between associated objects, and indicates that three relationships may exist. For example, A and/or B may indicate the following three cases: Only A exists, both A and B exist, and only B exists.

The terms "first", "second", and the like in the specification and claims of the embodiments of this application are used to distinguish between different objects, and are not used to describe a particular order of the objects. For example, a first target object, a second target object, and the like are used to distinguish between different target objects, and are not used to describe a particular order of target objects.

In the embodiments of this application, words such as "example" or "for example" are used to represent giving an example, an illustration, or a description. Any embodiment or design solution described as "example" or "for example" in the embodiments of this application should not be explained as being preferred or advantageous over other embodiments or design solutions. Exactly, use of the words such as "example" or "for example" is intended to present related concepts in a specific manner.

In the description of the embodiments of this application, unless otherwise stated, "a plurality of" means two or more. For example, a plurality of processing units refer to two or more processing units, and a plurality of systems refer to two or more systems.

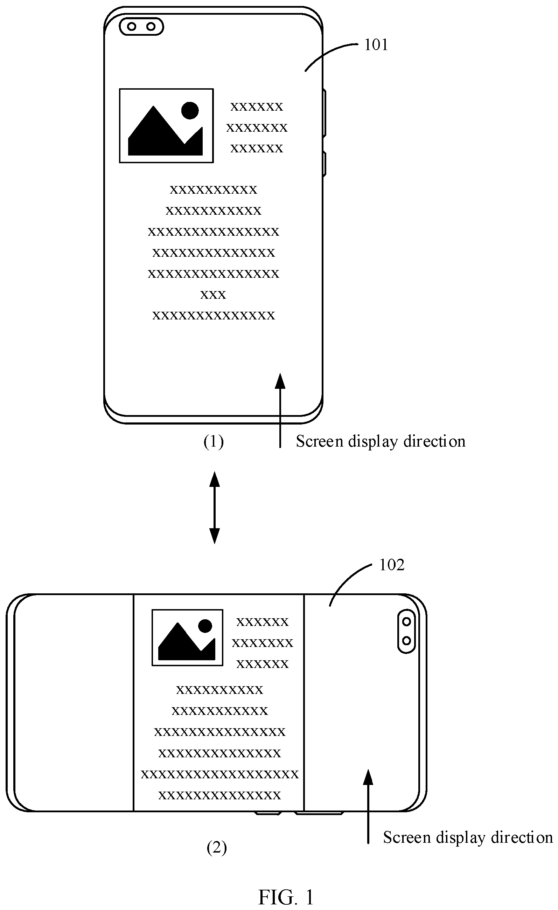

A mobile phone is used as an example, and use scenarios of an electronic device may be classified into a portrait use scenario and a landscape use scenario. When the use scenario of the mobile phone is a portrait use scenario, a screen display direction of the mobile phone is portrait display. Refer to (1) in FIG. 1. When the use scenario of the mobile phone is a landscape use scenario, a screen display direction of the mobile phone is landscape display. Refer to (2) in FIG. 1. The screen display direction of the electronic device is a direction from a lower part of a display picture of the electronic device to an upper part. If the screen display direction of the electronic device is parallel to a long side direction of the electronic device, the screen display direction of the electronic device is portrait display. If the screen display direction of the electronic device is parallel to a short side direction of the electronic device, the screen display direction of the electronic device is landscape display.

After an "auto-rotate screen" function on the electronic device is enabled, if a deflection angle of the electronic device in a sensor coordinate system meets a specified condition, the electronic device automatically rotates the screen display direction of the electronic device, for example, switches from portrait display to landscape display, or switches from landscape display to portrait display.

When the deflection angle of the electronic device in the sensor coordinate system indicates that the electronic device is in a portrait state, the screen display direction of the electronic device is portrait display. When the deflection angle of the electronic device in the sensor coordinate system indicates that the electronic device is in a landscape state, the screen display direction of the electronic device is landscape display. In this way, after the "auto-rotate screen" function on the electronic device is enabled, if a posture of the electronic device changes from the landscape state to the portrait state, the electronic device switches from landscape display to portrait display. If the posture of the electronic device changes from the portrait state to the landscape state, the electronic device switches from portrait display to landscape display.

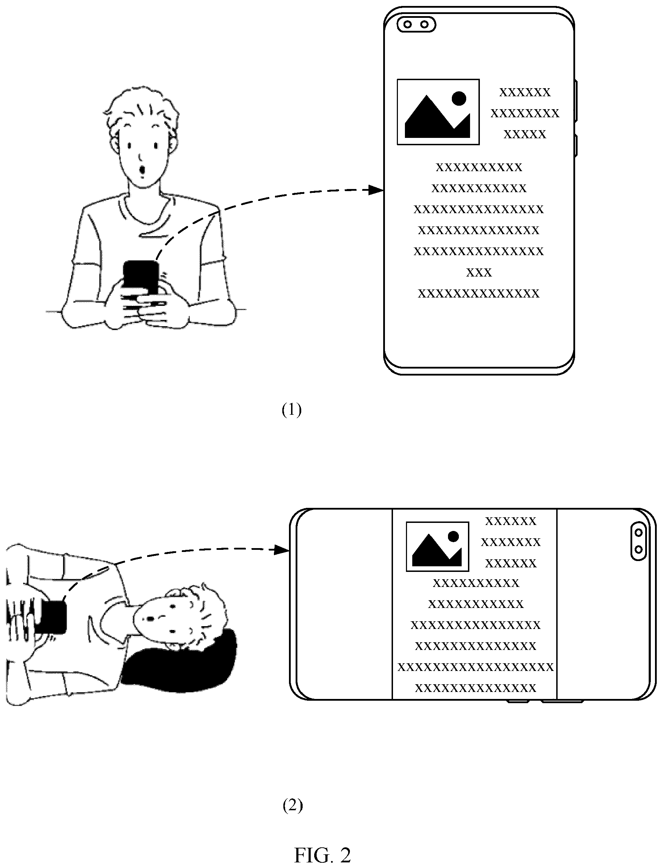

FIG. 2 shows an example of an application scenario. The user uses the mobile phone when sitting, and the mobile phone is in the portrait state. In this case, the screen display direction of the mobile phone is portrait display, as shown in (1) in FIG. 2. In this case, if the user lies on the side (in other words, lies sideways) and continues to use the mobile phone, and the "auto-rotate screen" function of the mobile phone is in an enabled state, because the posture of the mobile phone is adjusted from the portrait state to the landscape state, the screen display direction of the mobile phone is switched from portrait display to landscape display, as shown in (2) in FIG. 2. However, when the user holds the mobile phone and lies on the side, landscape display of the mobile phone is not suitable for human eyes to view. In this case, the user further needs to manually perform adjustment (for example, disable the "auto-rotate screen" function), so that the mobile phone switches back to portrait display. That is, when the user lies on the side, automatic switching of the screen display direction of the mobile phone from portrait display to landscape display is not expected by the user, and continuing to maintain portrait display better meets a usage expectation the user.

A reason for poor user experience shown in FIG. 2 is that the electronic device usually determines, by using only a physical sensor such as an acceleration sensor and a gyroscope of the electronic device, whether the deflection angle of the electronic device in the sensor coordinate system changes, and automatically rotates the screen display direction when a deflection angle change meets a specified condition.

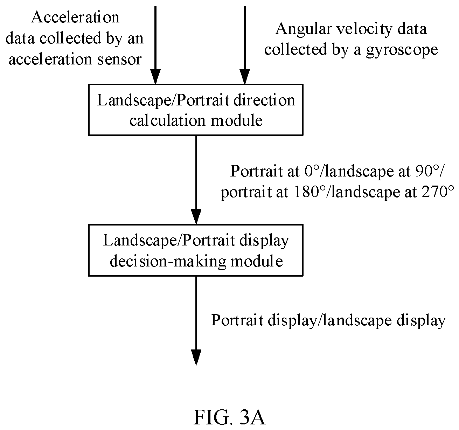

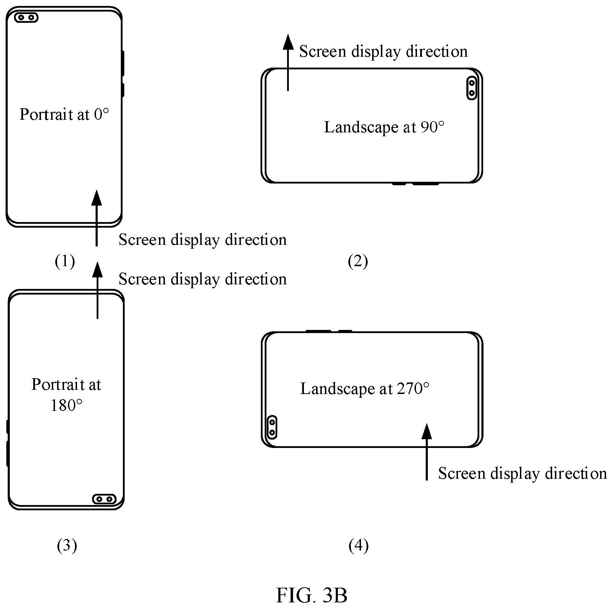

As shown in FIG. 3A, in the electronic device, a landscape/portrait direction calculation module calculates a deflection angle of the electronic device in the sensor coordinate system based on acceleration data collected in real time by the acceleration sensor and angular velocity data collected in real time by the gyroscope, and determines, based on the calculated deflection angle, a landscape/portrait direction of the electronic device, for example, portrait at 0°, landscape at 90°, portrait at 180°, or landscape at 270°. An opposite direction of a gravity direction is 0°, and the deflection angle (for example, 90°, 180°, or 270°) of the electronic device is defined based on a clockwise rotation direction. (1) in FIG. 3B is a schematic diagram of an example in which a landscape/portrait direction of an electronic device is portrait at 0°, (2) in FIG. 3B is a schematic diagram of an example in which a landscape/portrait direction of an electronic device is landscape at 90°, (3) in FIG. 3B is a schematic diagram of an example in which a landscape/portrait direction of an electronic device is portrait at 180°, and (4) in FIG. 3B is a schematic diagram of an example in which a landscape/portrait direction of an electronic device is landscape at 270°. After the landscape/portrait direction calculation module determines the landscape/portrait direction of the electronic device, a landscape/portrait display decision-making module in the electronic device may determine the screen display direction of the electronic device based on the landscape/portrait direction of the electronic device, for example, portrait display or landscape display.

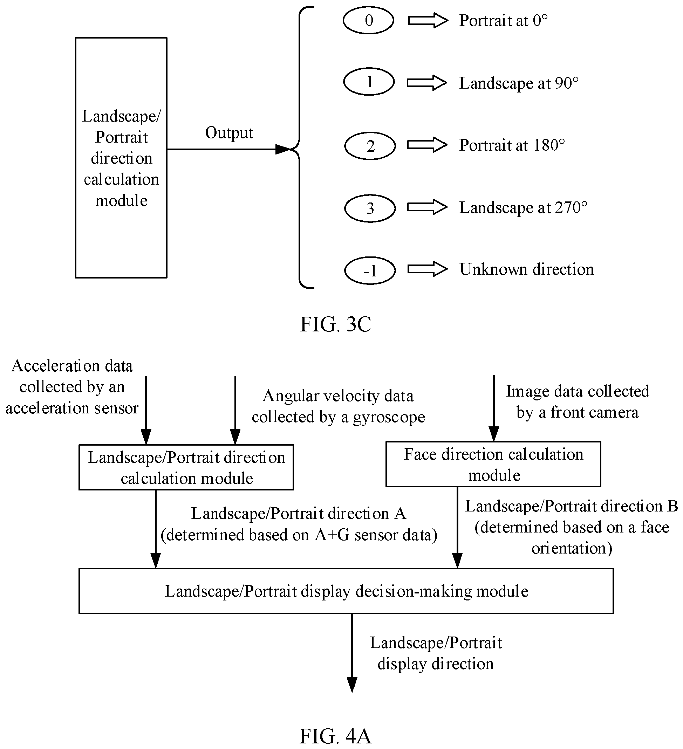

In an embodiment of this application, after determining the landscape/portrait direction of the electronic device, the landscape/portrait direction calculation module may output different values to indicate different landscape/portrait directions. As shown in FIG. 3C, the landscape/portrait direction calculation module outputs a value "0" to indicate that the landscape/portrait direction of the electronic device is portrait at 0°, the landscape/portrait direction calculation module outputs a value "1" to indicate that the landscape/portrait direction of the electronic device is landscape at 90°, the landscape/portrait direction calculation module outputs a value "2" to indicate that the landscape/portrait direction of the electronic device is portrait at 180°, and the landscape/portrait direction calculation module outputs a value "3" to indicate that the landscape/portrait direction of the electronic device is landscape at 270°. If the landscape/portrait direction calculation module cannot determine the landscape/portrait direction of the electronic device, a value "-1" may be output to indicate that the landscape/portrait direction of the electronic device is an unknown direction.

Portrait display may be further classified into portrait display at 0° and portrait display at 180°, and landscape display may be further classified into landscape display at 90° and landscape display at 270°. It may be understood that, when the electronic device is in a portrait state at 0°, the screen display direction of the electronic device may be referred to as portrait display at 0°, from a short side of a lower end of a display screens to a short side of an upper end (an end at which a front camera is located) of the display screen. Refer to (1) in FIG. 3B. When the electronic device is in a landscape state at 90°, the screen display direction of the electronic device may be referred to as landscape display at 90°, from a right end of the display screen to a left end of the display screen. Refer to (2) in FIG. 3B. When the electronic device is in a portrait state at 180°, the screen display direction of the electronic device may be referred to as portrait display at 180°, from the upper end of the display screen to the lower end of the display screen. Refer to (3) in FIG. 3B. When the electronic device is in a landscape state at 270°, the screen display direction of the electronic device may be referred to as landscape display at 270°, from the left end of the display screen to the right end of the display screen. Refer to (4) in FIG. 3B.

In addition, when determining the screen display direction of the electronic device, the landscape/portrait display decision-making module further needs to consider whether a currently displayed APP (Application, application) supports landscape/portrait rotation. When the currently displayed APP supports the landscape/portrait rotation (the following uses this premise as an example to explain landscape/portrait auto-rotation): if the landscape/portrait direction calculation module determines that the landscape/portrait direction of the electronic device is portrait at 0°, the landscape/portrait display decision-making module may determine that the screen display direction of the electronic device is portrait display at 0°. If the landscape/portrait direction calculation module determines that the landscape/portrait direction of the electronic device is landscape at 90°, the landscape/portrait display decision-making module may determine that the screen display direction of the electronic device is landscape display at 90°. If the landscape/portrait direction calculation module determines that the landscape/portrait direction of the electronic device is landscape at 270°, the landscape/portrait display decision-making module may determine that the screen display direction of the electronic device is landscape display at 270°.

It should be noted that some electronic devices support portrait display at 180°, for example, a portable android device, and some electronic devices do not support portrait display at 180°, for example, a mobile phone. Further, when the landscape/portrait direction of the electronic device changes to portrait at 180°, the landscape/portrait display decision-making module may determine the screen display direction of the electronic device based on an actual situation, for example, maintain an original display direction or perform portrait display at 180°. This is not limited in this embodiment.

When the electronic device performs screen auto-rotation control based only on sensor data, if the electronic device is in a portrait state, the screen display direction of the electronic device is portrait display, or if the electronic device is in a landscape state, the screen display direction of the electronic device is landscape display. Therefore, in the application scenario shown in FIG. 2, before the user lies on the side, the mobile phone is in the portrait state and the mobile phone is in portrait display, which meets a usage habit of the user. However, after the user lies on the side, the mobile phone is in the landscape state, and the landscape/portrait display decision-making module of the mobile phone determines that a screen display state of the mobile phone is the landscape state. In this case, the screen display direction of the mobile phone is automatically switched to landscape display, which clearly does not meet a usage habit of the user.

To resolve this problem and improve use experience of the user, when determining a screen display direction to implement a landscape/portrait auto-rotation function, the landscape/portrait display decision-making module in the electronic device refers to a landscape/portrait direction calculated based on a gravity direction of the electronic device, and may further refer to a face direction of the user, so that the landscape/portrait auto-rotation function of the electronic device better meets a usage habit of the user. The usage habit of the user is met only when the screen display direction of the electronic device is consistent with the face direction. The face direction is a direction from a philtrum to a forehead center. Further, in a scenario in which the user lies on the side and holds the mobile phone, although the mobile phone is in the landscape state, the mobile phone is in portrait display, to be consistent with the face direction of the user, so that the usage habit of the user can be met.

FIG. 4A shows an example of an implementation. As shown in FIG. 4A, in the electronic device, the landscape/portrait direction calculation module calculates the deflection angle of the electronic device in the sensor coordinate system based on acceleration data collected in real time by the acceleration sensor and angular velocity data collected in real time by the gyroscope, and determines, based on the calculated deflection angle, a landscape/portrait direction A of the electronic device, for example, portrait at 0°, landscape at 90°, portrait at 180°, landscape at 270°, or an unknown direction. In addition, in the electronic device, a face direction calculation module performs face recognition on image data collected by the front camera, determines an included angle between a face orientation (which is alternatively referred to as a face direction) and a natural direction of the electronic device when only one face is recognized, and determines, based on the included angle, a landscape/portrait direction B of the electronic device, for example, portrait at 0°, landscape at 90°, portrait at 180°, landscape at 270°, or an unknown direction. The landscape/portrait direction A is a landscape/portrait direction determined based on the gravity direction of the electronic device, and the landscape/portrait direction B is a landscape/portrait direction determined based on the face direction of the user.

In this way, when determining the screen display direction, the landscape/portrait display decision-making module can refer to both the landscape/portrait direction A and the landscape/portrait direction B, that is, refer to both the gravity direction of the electronic device and the face direction of the user. When the landscape/portrait direction A is inconsistent with the landscape/portrait direction B, the landscape/portrait display decision-making module uses, as a reference, the landscape/portrait direction B determined based on the face direction, which better meets a usage expectation of the user for the screen display direction of the electronic device.

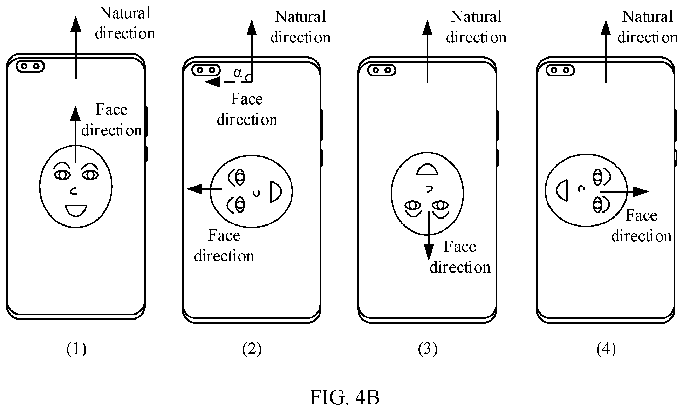

As shown in FIG. 4B, the face direction calculation module performs face recognition on image data collected by the front camera, and determines an included angle α between a face direction and the natural direction of the electronic device when only one face is recognized. The natural direction of the electronic device is a direction from a lower end of the electronic device to an upper end, and the upper end is an end at which the front camera and a rear camera of the electronic device are located. When α=0°, the face faces upward, as shown in (1) in FIG. 4B, and in this case, the landscape/portrait direction of the electronic device is portrait at 0°. When α=90°, the face faces leftward, as shown in (2) in FIG. 4B, and in this case, the landscape/portrait direction of the electronic device is landscape at 90°. When α=180°, the face faces downward, as shown in (3) in FIG. 4B, and in this case, the landscape/portrait direction of the electronic device is portrait at 180°. When α=270°, the face faces rightward, as shown in (4) in FIG. 4B, and in this case, the landscape/portrait direction of the electronic device is landscape at 270°.

In this embodiment of this application, the face direction calculation module performs the face recognition based on the image data collected by the front camera, determines the included angle α between the face direction and the natural direction of the electronic device when only one face is recognized, and determines an angle range to which the included angle α belongs. Different angle ranges may indicate different face orientations, that is, the different angle ranges may indicate different landscape/portrait states of the electronic device. Further, the face direction calculation module may output the landscape/portrait direction of the electronic device (namely, the foregoing mentioned landscape/portrait direction B of the electronic device determined based on the face direction) based on the angle range to which the included angle α belongs.

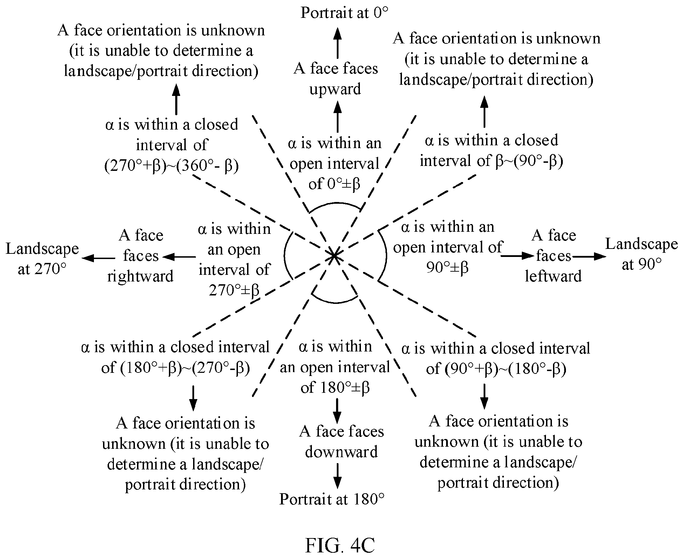

As shown in FIG. 4C, when α∈ (0°-β, 0°+β), it indicates that the face faces upward, and in this case, the landscape/portrait direction of the electronic device is portrait at 0°. When α∈ (90°-β, 90°+β), it indicates that the face faces leftward, and in this case, the landscape/portrait direction of the electronic device is landscape at 90°. When α∈ (180°-β, 180°+β), it indicates that the face faces downward, and in this case, the landscape/portrait direction of the electronic device is portrait at 180°. When α∈ (270°-β, 270°+β), it indicates that the face faces rightward, and in this case, the landscape/portrait direction of the electronic device is landscape at 270°. When α∈ [β, 90°-β], α∈ [90°+β, 180°-β], α∈ [180°+β, 270°-β], or α∈ [270°+β, 360°-β], it indicates that the face orientation is unknown, and in this case, the landscape/portrait direction of the electronic device cannot be determined.

β is a direction recognition range threshold, and β is greater than 0° and less than 45°. The value may be determined based on actual user experience.

Currently, it is considered that a chip platform has an angular resolution when performing face direction recognition, and therefore, in this embodiment, a β value may be determined with reference to the angular resolution at which the chip platform used by the electronic device performs face direction detection, to avoid a problem of a large amount of misrecognition of landscape/portrait directions due to improper setting of the β value, causing frequent switching of landscape/portrait display.

When the angular resolution at which the chip platform performs face direction recognition is 30°, if the β value is set to 35° and effective angle intervals for recognizing the face orientation are (-35°, 35°), (55°, 125°), (145°, 215°), and (235°, 305°), boundary angle values of 30° away from left and right sides of a central axis, being 30°, 60°, 120°, 150°, 210°, 240°, 300°, and 330°, all fall within the effective angle intervals for recognizing the face orientation. Further, a face recognition result jitters among these boundary angle values. Consequently, landscape/portrait display is frequently switched. For example, when the included angle α is around 45°, if a recognition result of the chip platform is 30°, the electronic device is in portrait display at 0°, or if a recognition result of the chip platform is 60°, the electronic device is in landscape display at 90°. In this way, the face recognition result jitters between 30° and 60°, which causes frequent switching of landscape/portrait display.

In this embodiment of this application, when the angular resolution at which the chip platform performs the face recognition is 30°, the β value is set to 30°. In this case, effective angle intervals for recognizing the face orientation are (-30°, 30°), (60°, 120°), (150°, 210°), and (240°, 300°), and boundary angle values of 30° away from left and right sides of the central axis, being 30°, 60°, 120°, 150°, 210°, 240°, 300°, and 330° (or referred to as -30°) do not fall into the effective angle intervals for recognizing the face orientation. Further, even if a face recognition result jitters among these boundary angle values, a phenomenon of frequent switching of landscape/portrait display does not occur.

In this embodiment of this application, after determining the landscape/portrait direction of the electronic device, the face direction calculation module may output different values to indicate different landscape/portrait directions. As shown in FIG. 4D, when α∈ (0°-β, 0°+β), the face direction calculation module outputs a value "0" to indicate that the landscape/portrait direction of the electronic device is portrait at 0°. When α∈ (90°-β, 90°+β), the face direction calculation module outputs a value "1" to indicate that the landscape/portrait direction of the electronic device is landscape at 90°. When α∈ (180°-β, 180°+β), the face direction calculation module outputs a value "2" to indicate that the landscape/portrait direction of the electronic device is portrait at 180°. When α∈ (270°-β, 270°+β), the face direction calculation module outputs a value "3" to indicate that the landscape/portrait direction of the electronic device is landscape at 270°. When α∈ [β, 90°-β], α∈ [90°+β, 180°-β], α∈ [180°+β, 270°-β], or α∈ [270°+β, 360°-β], and the face direction calculation module cannot determine the landscape/portrait direction of the electronic device, and may output to a value "-1" to indicate that the landscape/portrait direction of the electronic device is an unknown direction.

When the angular resolution at which the chip platform used by the electronic device performs the face direction detection is 30°, that the electronic device determines a first landscape/portrait direction based on the included angle α between the face direction and the natural direction of the electronic device may be further implemented based on an axial algorithm. When α=0, the first landscape/portrait direction is a portrait direction at 0°, and the face direction calculation module outputs the value "0". When α=90°, the first landscape/portrait direction is a landscape direction at 90°, and the face direction calculation module outputs the value "1". When α=180°, the first landscape/portrait direction is a portrait direction at 180°, and the face direction calculation module outputs the value "2". When α=270°, the first landscape/portrait direction is a landscape direction at 270°, and the face direction calculation module outputs the value "3".

In addition, the face direction calculation module performs the face recognition based on the image data collected by the front camera. If a plurality of faces are recognized, a value "-1" may be output to indicate that the landscape/portrait direction of the electronic device is an unknown direction. With evolution of a capability of face recognition, when the face direction calculation module performs the face recognition based on the image data collected by the front camera, if a living face can be distinguished from a photo face, and the face of an owner can be recognized, the landscape/portrait direction of the electronic device may be further determined when the plurality of faces are recognized, and a value used to indicate the landscape/portrait direction is output. This is not limited in this embodiment.

The face direction calculation module performs the face recognition based on the image data collected by the front camera, and if no face is recognized, a value "-2" may be output to indicate that no face is recognized. The face direction calculation module performs the face recognition based on the image data collected by the front camera, and if there is another abnormality, for example, an error report or timeout, a value "-3" may be output to indicate that there is an abnormality in the face recognition.

It should be noted that for a same landscape/portrait direction, the landscape/portrait direction calculation module and the face direction calculation module may use a same value for identification, or may use different values for identification. In this embodiment of this application, for example, a same value is used for identification. This is not limited thereto.

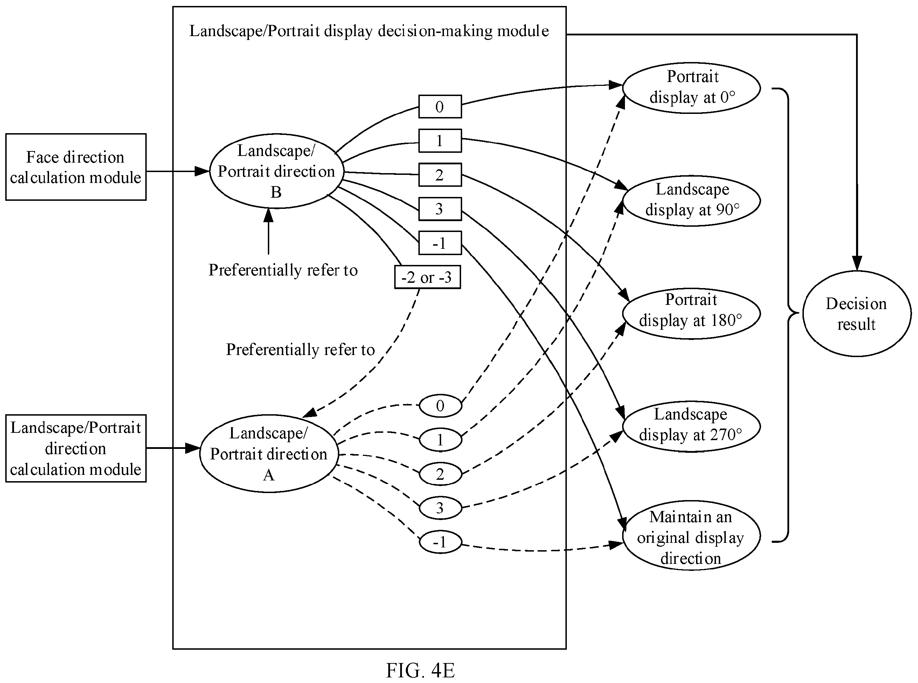

Logic of making a screen display direction decision by the landscape/portrait display decision-making module based on the landscape/portrait direction A output by the landscape/portrait direction calculation module and the landscape/portrait direction B output by the face direction calculation module may be shown in FIG. 4E.

Referring to FIG. 4E, the landscape/portrait direction A is determined based on gravity data of the electronic device, and the landscape/portrait direction B is determined based on the face direction of the user. Therefore, after receiving the landscape/portrait direction A and the landscape/portrait direction B, the landscape/portrait display decision-making module preferentially refers to the landscape/portrait direction B. If a value of the landscape/portrait direction B is "0", which indicates that the landscape/portrait direction is the portrait direction at 0°, a decision result of the landscape/portrait display decision-making module is portrait display at 0°. If a value of the landscape/portrait direction B is "1", which indicates that the landscape/portrait direction is the landscape direction at 90°, a decision result of the landscape/portrait display decision-making module is landscape display at 90°. If a value of the landscape/portrait direction B is "2", which indicates that the landscape/portrait direction is the portrait direction at 180°, a decision result of the landscape/portrait display decision-making module is portrait display at 180°. If a value of the landscape/portrait direction B is "3", which indicates that the landscape/portrait direction is the landscape direction at 270°, a decision result of the landscape/portrait display decision-making module is landscape display at 270°. If a value of the landscape/portrait direction B is "-1", which indicates that the landscape/portrait direction is an unknown direction, a decision result of the landscape/portrait display decision-making module is to maintain an original display direction (or referred to as a current display direction).

If a value of the landscape/portrait direction B is "-2" or "-3", which indicates that there is no face or there is an abnormality in the face recognition, the landscape/portrait display decision-making module preferentially considers the landscape/portrait direction A, that is, determines the screen display direction based on the landscape/portrait direction A.

Similarly, if a value of the landscape/portrait direction A is "0", which indicates that the landscape/portrait direction is the portrait direction at 0°, a decision result of the landscape/portrait display decision-making module is portrait display at 0°. If a value of the landscape/portrait direction A is "1", which indicates that the landscape/portrait direction is the landscape direction at 90°, a decision result of the landscape/portrait display decision-making module is landscape display at 90°. If a value of the landscape/portrait direction A is "2", which indicates that the landscape/portrait direction is the portrait direction at 180°, a decision result of the landscape/portrait display decision-making module is portrait display at 180°. If a value of the landscape/portrait direction A is "3", which indicates that the landscape/portrait direction is the landscape direction at 270°, a decision result of the landscape/portrait display decision-making module is landscape display at 270°. If a value of the landscape/portrait direction A is "-1", which indicates that the landscape/portrait direction is an unknown direction, a decision result of the landscape/portrait display decision-making module is to maintain an original display direction.

In this way, when the landscape/portrait display decision-making module makes a decision on the screen display direction, the face direction is preferentially considered, and a landscape/portrait state of the electronic device automatically changes with the face. The face direction calculation module continually performs detection. If the face direction is recognized and the landscape/portrait direction B is determined, the landscape/portrait display decision-making module determines the screen display direction based on the landscape/portrait direction B. If there is no face or there is an abnormality in first-frame recognition, the landscape/portrait display decision-making module preferentially considers the gravity direction, that is, determines the screen display direction based on the landscape/portrait direction A.

However, the face direction calculation module continually detects the face direction to determine a landscape/portrait direction corresponding to the face direction. This causes an increase in power consumption of the entire device, affects standby duration, and causes a relatively high degree of dependence on a face detection capability (for example, performance such as accuracy and reliability), and may further increase a frequency of landscape/portrait auto-rotation of the electronic device, causing poorer use experience of the user in some scenarios.

The following uses the mobile phone as an example to explain poor experience of the user by using several example scenarios.

In an example scenario, the mobile phone is placed on a support of a table, and the user seats at a location that cannot be photographed by the front camera and watches the mobile phone. If a person passes by from a side, the front camera captures a face direction of the person, and if a landscape/portrait display manner determined based on the face direction is inconsistent with a current display manner, a screen of the mobile phone automatically rotates, which does not meet a usage expectation of the user of the mobile phone.

In an example scenario, the user holds the mobile phone for using. When a result output by the face direction calculation module switches between presence or absence of a face, and a recognized face switches between the face of the owner and another face (which is different from a face direction of the owner) as a field of view of the front camera of the mobile phone changes, the screen of the mobile phone also automatically rotates back and forth.

In an example scenario, there is a person portrait photo on a wall behind the user, a plurality of faces appear in an image collected by using the front camera of the mobile phone, and screen auto-rotation based on the face direction does not take effect. However, when the user stands up to leave, there is only the portrait photo on the wall in an image captured by the front camera of the mobile phone, and therefore, screen auto-rotation based on a face direction of the portrait photo takes effect, and the screen auto-rotation is triggered, causing poor use experience of the user.

Therefore, although full-scene face recognition is more in line with a human factor in theory, because of limitations such as a need to capture the face direction in use and a capability of the chip platform, there may also be a problem of wrong or redundant screen rotation that violates a rotation intention of the user.

To resolve the foregoing problem, an embodiment of this application provides a display method. In the display method, if a scenario in which a user uses an electronic device (which is usually a hand-held electronic device or a hand-held portable electronic device, for example, a mobile phone or a portable android device) is a side-lying use scenario, when a landscape/portrait display decision-making module makes a decision on a screen display direction, a face direction is preferentially considered, and the screen display direction of the electronic device automatically changes with a face. If a scenario in which the user uses the electronic device is a non-side-lying use scenario, when the landscape/portrait display decision-making module makes a decision on the screen display direction, a gravity direction is preferentially considered, and the screen display direction of the electronic device automatically changes with the gravity direction.

When landscape/portrait auto-rotation is performed based on the gravity direction, a 0 degree reference of the landscape/portrait auto-rotation is an opposite direction of the gravity direction. The face direction (which is a direction from a philtrum to a forehead center) is the same as an opposite direction of gravity in most scenarios. Therefore, the landscape/portrait auto-rotation based on the gravity direction can meet most of demands of the user. However, in a scenario in which the user lies on the side and uses the electronic device, the face direction is approximately orthogonal to the opposite direction of the gravity, and the landscape/portrait auto-rotation is preferentially performed based on the face direction. This can avoid a problem that landscape display of the electronic device in a scenario in which the user lies on the side does not meet an expectation of the user for landscape/portrait display.

Therefore, the display method provided in this embodiment of this application can resolve a critical pain point scenario of the user, that is, can resolve the problem that landscape display of the electronic device in the scenario in which the user lies on the side does not meet the expectation of the user for landscape/portrait display, and can also resolve a problem of incorrect auto-rotation of a screen of the electronic device resulting from an incorrect face direction calculation result caused by changes in light luminance, a field of view, focusing, and the like.

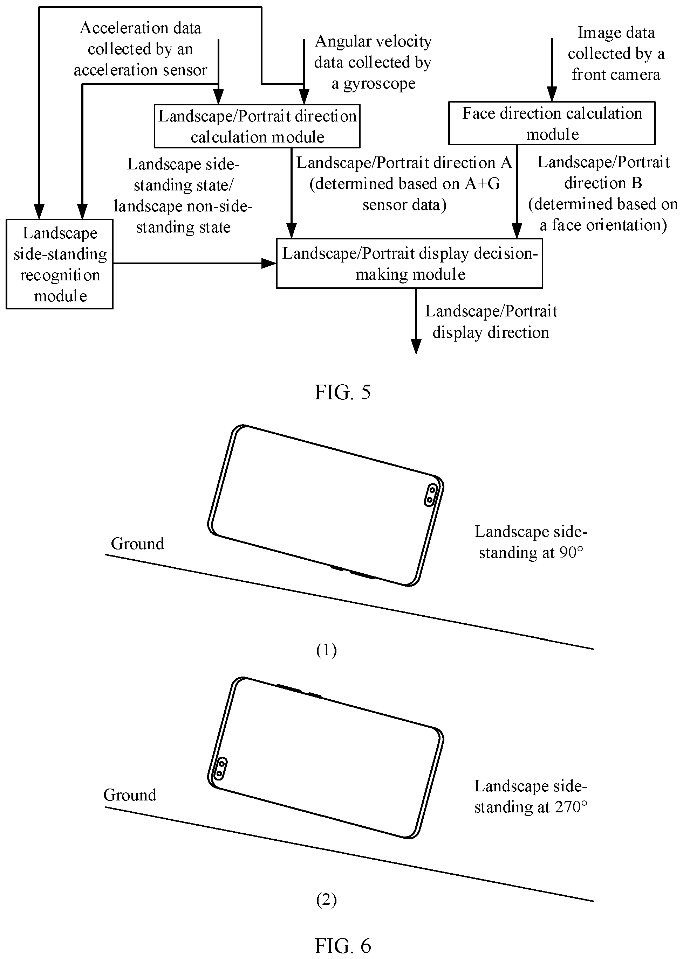

In an optional implementation, as shown in FIG. 5, in the electronic device, a landscape/portrait direction calculation module calculates a deflection angle of the electronic device in a sensor coordinate system based on acceleration data collected in real time by an acceleration sensor and angular velocity data collected in real time by a gyroscope, and determines, based on the calculated deflection angle, a landscape/portrait direction A of the electronic device, for example, portrait at 0°, landscape at 90°, portrait at 180°, landscape at 270°, or an unknown direction. In addition, in the electronic device, a face direction calculation module performs face recognition on image data collected by a front camera, determines an included angle between a face orientation and a natural direction of the electronic device when only one face is recognized, and determines, based on the included angle, a landscape/portrait direction B of the electronic device, for example, portrait at 0°, landscape at 90°, portrait at 180°, landscape at 270°, or an unknown direction. In addition, a landscape side-standing recognition module calculates a deflection angle of the electronic device in the sensor coordinate system based on acceleration data collected in real time by the acceleration sensor and angular velocity data collected in real time by the gyroscope, recognizes, based on the calculated deflection angle, whether the electronic device is in a landscape side-standing state, and sends a recognition result to the landscape/portrait display decision-making module.

That the electronic device is in the landscape side-standing state means that the electronic device is in both a landscape state and a side-standing state. The side-standing state (that is, a state in which a display screen is perpendicular to or approximately perpendicular to a ground) is relative to a horizontally-placed state (that is, a state in which the display screen is parallel to or approximately parallel to the ground). When the electronic device is in the landscape side-standing state, a long frame of the electronic device is parallel to or approximately parallel to the ground, and a short frame of the electronic device is perpendicular to or approximately perpendicular to the ground. Because the landscape state may be classified into a landscape state at 90° and a landscape state at 270°, the landscape side-standing state may also be classified into a landscape side-standing state at 90° and a landscape side-standing state at 270°. (1) in FIG. 6 shows an example of a landscape side-standing state at 90° of a mobile phone, and (2) in FIG. 6 shows an example of a landscape side-standing state at 270° of a mobile phone.

In a scenario in which the user lies on the side and uses the mobile phone, a use scenario in which the mobile phone is in a landscape horizontally-placed state does not meet a usage habit of the user, and a use scenario in which the mobile phone is in the landscape side-standing state meets the usage habit of the user. When the mobile phone is in the landscape side-standing state at 90°, when the user lies on a right side and uses the mobile phone, display of the mobile phone in a natural direction meets a usage habit of the user, or when the user lies on a left side and uses the mobile phone, the display of the mobile phone in the natural direction does not meet the usage habit of the user. Similarly, when the mobile phone is in the landscape side-standing state at 270°, when the user lies on the right side and uses the mobile phone, the display of the mobile phone in the natural direction does not meet a usage habit of the user, or when the user lies on the left side and uses the mobile phone, the display of the mobile phone in the natural direction meets the usage habit of the user.

Therefore, in the scenario in which the user lies on the side and uses the mobile phone, if the mobile phone is in the landscape side-standing state, the landscape/portrait display decision-making module needs to consider the face direction when determining the screen display direction, so that a screen display direction of the mobile phone meets an expectation of the user for landscape/portrait display.

Still referring to FIG. 5, when determining the screen display direction, the landscape/portrait display decision-making module determines, depending on whether the electronic device is in the landscape side-standing state, whether it is necessary to refer to the landscape/portrait direction B determined based on the face direction. If the electronic device is in the landscape side-standing state, the landscape/portrait display decision-making module preferentially refers to the landscape/portrait direction B based on the landscape/portrait direction B determined based on the face direction, to make a decision on a landscape/portrait display direction. If the electronic device is in a landscape non-side-standing state, the landscape/portrait display decision-making module preferentially refers to the landscape/portrait direction A based on the landscape/portrait direction A determined based on the gravity direction, to make a decision on a landscape/portrait display direction.

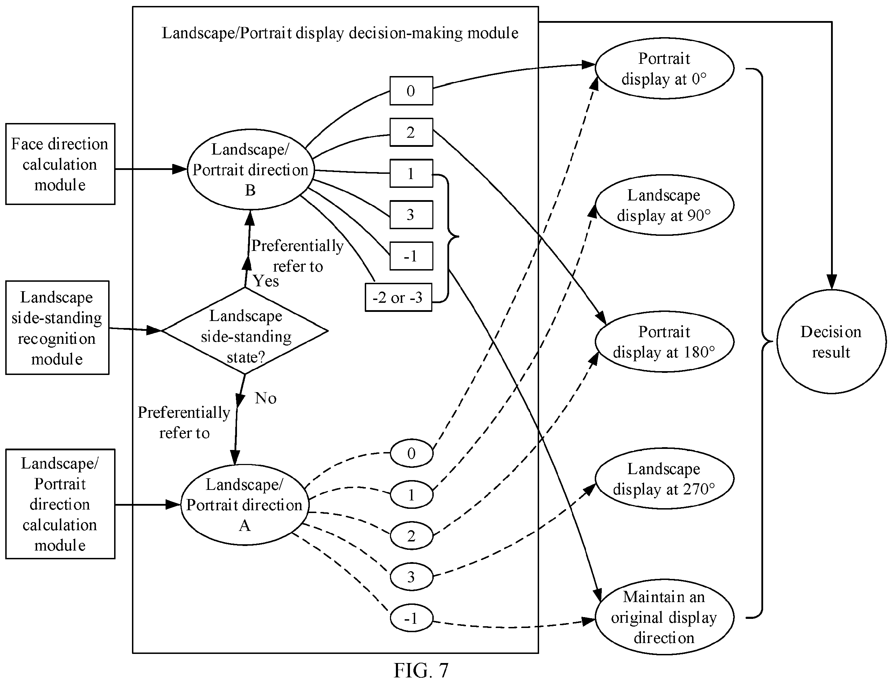

Logic of making a screen display direction decision by the landscape/portrait display decision-making module based on the landscape/portrait direction A output by the landscape/portrait direction calculation module, the landscape/portrait direction B output by the face direction calculation module, and whether the electronic device is in the landscape side-standing state may be shown in FIG. 7.

Referring to FIG. 7, the landscape/portrait direction A is determined based on gravity data of the electronic device, and the landscape/portrait direction B is determined based on the face direction of the user. Therefore, after the landscape/portrait display decision-making module receives the landscape/portrait direction A, the landscape/portrait direction B, and the result of recognizing whether the electronic device is in the landscape side-standing state, if the electronic device is in the landscape side-standing state, for example, the result of recognizing whether the electronic device is in the landscape side-standing state is "1", the landscape/portrait display decision-making module preferentially refers to the landscape/portrait direction B.

In this case, if a value of the landscape/portrait direction B is "0", which indicates that the landscape/portrait direction is the portrait direction at 0°, a decision result of the landscape/portrait display decision-making module is portrait display at 0°. If a value of the landscape/portrait direction B is "1", it indicates that the landscape/portrait direction is the landscape direction at 90°. Because landscape display at 90° does not resolve a pain point scenario problem of the user to be resolved in this application (that is, landscape display of the electronic device in the side-lying scenario does not meet the expectation of the user for landscape/portrait display), a decision result of the landscape/portrait display decision-making module is to maintain an original display direction (or referred to as a current display direction). If a value of the landscape/portrait direction B is "2", which indicates that the landscape/portrait direction is the portrait direction at 180°, a decision result of the landscape/portrait display decision-making module is portrait display at 180°. If a value of the landscape/portrait direction B is "3", it indicates that the landscape/portrait direction is the landscape direction at 270°. Because landscape display at 270° does not resolve the pain point scenario problem of the user to be resolved in this application, a decision result of the landscape/portrait display decision-making module is to maintain an original display direction. If a value of the landscape/portrait direction B is "-1", which indicates that the landscape/portrait direction is an unknown direction, a decision result of the landscape/portrait display decision-making module is to maintain an original display direction.

It should be emphasized that, if a value of the landscape/portrait direction B is "-2" or "-3", which indicates that there is no face or there is an abnormality in the face recognition, a decision result of the landscape/portrait display decision-making module is also to maintain an original display direction.

In this way, in the scenario in which the user lies on the side and uses the mobile phone, if the mobile phone is in the landscape side-standing state, regardless of whether the face direction calculation module can determine a landscape/portrait state of the mobile phone, if no face is recognized or there is an abnormality in the face recognition, the landscape/portrait display decision-making module does not determine the screen display direction of the mobile phone based on the gravity direction, to avoid a case in which the screen display direction (namely, landscape display) of the mobile phone determined based on the gravity direction does not meet the expectation of the user (namely, portrait display) for landscape/portrait display when the user lies on the side. In addition, when the value of the landscape/portrait direction B is "-2" or "-3", which indicates that the face direction calculation module cannot provide a valid vote, the landscape/portrait display decision-making module makes a decision to maintain the original display direction.

In addition, it should be emphasized that when the value of the landscape/portrait direction B is "1" or "3", it indicates that the landscape/portrait direction is the landscape direction, and the face direction is perpendicular to the natural direction of the mobile phone, which does not resolve the pain point scenario problem of the user to be resolved in this application. In a scenario in which the user does not lie on the side, the landscape/portrait auto-rotation based on the gravity direction can meet a usage requirement of the user, and it is unnecessary for the face direction calculation module to vote to determine a display direction of the mobile phone. Therefore, when the value of the landscape/portrait direction B is "1" or "3", a vote of the face direction calculation module is independent of resolving the problem that landscape display does not meet the expectation of the user in the scenario in which the user lies on the side. In this case, the landscape/portrait display decision-making module makes a decision to continue to maintain the original display direction.

If the electronic device is in a landscape non-side-standing state, for example, if a result of recognizing whether the electronic device is in the landscape side-standing state is "0", the landscape/portrait display decision-making module preferentially refers to the landscape/portrait direction A.

In this case, if a value of the landscape/portrait direction A is "0", which indicates that the landscape/portrait direction is the portrait direction at 0°, a decision result of the landscape/portrait display decision-making module is portrait display at 0°. If a value of the landscape/portrait direction A is "1", which indicates that the landscape/portrait direction is the landscape direction at 90° (in this case, the electronic device is in a non-side-standing state), a decision result of the landscape/portrait display decision-making module is landscape display at 90°. If a value of the landscape/portrait direction A is "2", which indicates that the landscape/portrait direction is the portrait direction at 180°, a decision result of the landscape/portrait display decision-making module is portrait display at 180°. If a value of the landscape/portrait direction A is "3", which indicates that the landscape/portrait direction is the landscape direction at 270° (in this case, the electronic device is in the non-side-standing state), a decision result of the landscape/portrait display decision-making module is landscape display at 270°. If a value of the landscape/portrait direction A is "-1", which indicates that the landscape/portrait direction is an unknown direction, a decision result of the landscape/portrait display decision-making module is to maintain an original display direction.

In this way, when the landscape/portrait display decision-making module makes a decision on the screen display direction, if the electronic device is in the landscape side-standing state, the face direction is preferentially considered, and the landscape/portrait state of the electronic device automatically changes with the face. If there is no face or there is an abnormality in first-frame recognition, the landscape/portrait display decision-making module maintains the original display direction. Only when the electronic device is in a landscape non-side-standing state, the gravity direction is preferentially considered, and the landscape/portrait state of the electronic device automatically changes with gravity.

It should be noted that if the decision result is portrait display at 180°, taking the mobile phone as an example, portrait display at 180° (namely, reversing the mobile phone) does not meet a usage habit of the user. After the landscape/portrait display decision-making module reports the decision result, an upper layer may determine an actual screen display direction (for example, maintain the original direction) of the mobile phone based on a related setting.

In an optional implementation, the landscape/portrait direction calculation module may determine the landscape/portrait state of the electronic device, and also determine whether the electronic device is in the landscape side-standing state.

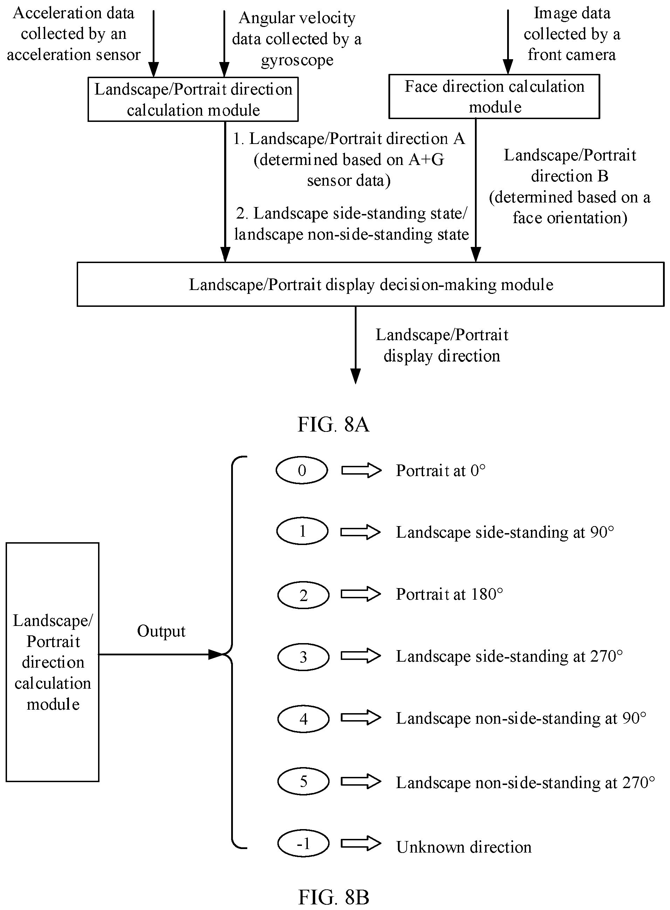

As shown in FIG. 8A, in the electronic device, the landscape/portrait direction calculation module calculates a deflection angle of the electronic device in the sensor coordinate system based on acceleration data collected in real time by the acceleration sensor and angular velocity data collected in real time by the gyroscope, and determines, based on the calculated deflection angle, a landscape/portrait direction A of the electronic device, for example, portrait at 0°, landscape at 90°, portrait at 180°, landscape at 270°, or an unknown direction. In addition, the landscape/portrait direction calculation module further calculates the deflection angle of the electronic device in the sensor coordinate system based on the acceleration data collected in real time by the acceleration sensor and the angular velocity data collected in real time by the gyroscope, and recognizes whether the electronic device is in the landscape side-standing state. In addition, in the electronic device, the face direction calculation module performs face recognition on image data collected by the front camera, determines an included angle between a face orientation and a natural direction of the electronic device when only one face is recognized, and determines, based on the included angle, a landscape/portrait direction B of the electronic device, for example, portrait at 0°, landscape at 90°, portrait at 180°, landscape at 270°, or an unknown direction.

Both the landscape/portrait direction of the electronic device and whether the electronic device is in the landscape side-standing state may be represented by an output value of the landscape/portrait direction calculation module. As shown in FIG. 8B, the landscape/portrait direction calculation module outputs a value "0" to indicate that the landscape/portrait direction of the electronic device is portrait at 0°. The landscape/portrait direction calculation module outputs a value "1" to indicate that the landscape/portrait direction of the electronic device is landscape at 90° and the electronic device is side-standing. The landscape/portrait direction calculation module outputs a value "2" to indicate that the landscape/portrait direction of the electronic device is portrait at 180°. The landscape/portrait direction calculation module outputs a value "3" to indicate that the landscape/portrait direction of the electronic device is landscape at 270° and the electronic device is side-standing. The landscape/portrait direction calculation module outputs a value "4" to indicate that the landscape/portrait direction of the electronic device is landscape at 90° and the electronic device is non-side-standing. The landscape/portrait direction calculation module outputs a value "5" to indicate that the landscape/portrait direction of the electronic device is landscape at 270° and the electronic device is non-side-standing. If the landscape/portrait direction calculation module cannot determine the landscape/portrait direction of the electronic device, a value "-1" may be output to indicate that the landscape/portrait direction of the electronic device is an unknown direction.

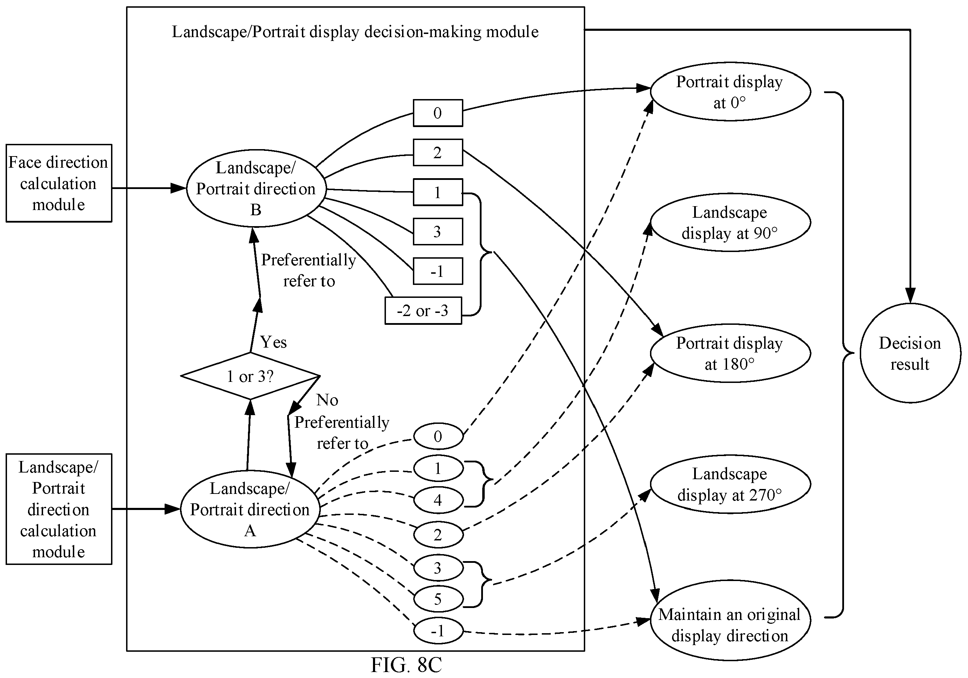

In this case, Logic of making a screen display direction decision by the landscape/portrait display decision-making module based on the landscape/portrait direction A output by the landscape/portrait direction calculation module and the landscape/portrait direction B output by the face direction calculation module may be shown in FIG. 8C.

Referring to FIG. 8C, the landscape/portrait direction A is determined based on gravity data of the electronic device, and the landscape/portrait direction B is determined based on the face direction of the user. Therefore, after the landscape/portrait display decision-making module receives the landscape/portrait direction A and the landscape/portrait direction B, if the landscape/portrait direction Ais "1" or "3", the landscape/portrait display decision-making module preferentially refers to the landscape/portrait direction B.

In this case, if a value of the landscape/portrait direction B is "0", which indicates that the landscape/portrait direction is the portrait direction at 0°, a decision result of the landscape/portrait display decision-making module is portrait display at 0°. If a value of the landscape/portrait direction B is "1", it indicates that the landscape/portrait direction is the landscape direction at 90°. Because landscape at 90° does not resolve a pain point scenario problem of the user to be resolved in this application, a decision result of the landscape/portrait display decision-making module is to maintain an original display direction (or referred to as a current display direction). If a value of the landscape/portrait direction B is "2", which indicates that the landscape/portrait direction is the portrait direction at 180°, a decision result of the landscape/portrait display decision-making module is portrait display at 180°. If a value of the landscape/portrait direction B is "3", which indicates that the landscape/portrait direction is the landscape direction at 270°. Because landscape at 270° does not resolve the pain point scenario problem of the user to be resolved in this application, a decision result of the landscape/portrait display decision-making module is to maintain an original display direction. If a value of the landscape/portrait direction B is "-1", which indicates that the landscape/portrait direction is an unknown direction, a decision result of the landscape/portrait display decision-making module is to maintain an original display direction.

It should be emphasized that, if a value of the landscape/portrait direction B is "-2" or "-3", which indicates that there is no face or there is an abnormality in the face recognition, a decision result of the landscape/portrait display decision-making module is also to maintain an original display direction.

After the landscape/portrait display decision-making module receives the landscape/portrait direction A and the landscape/portrait direction B, if the value of the landscape/portrait direction A is neither "1" nor "3", the landscape/portrait display decision-making module preferentially refers to the landscape/portrait direction A.

In this case, if a value of the landscape/portrait direction A is "0", which indicates that the landscape/portrait direction is the portrait direction at 0°, a decision result of the landscape/portrait display decision-making module is portrait display at 0°. If a value of the landscape/portrait direction A is "4", which indicates that the landscape/portrait direction is the landscape direction at 90°, a decision result of the landscape/portrait display decision-making module is landscape display at 90°. If a value of the landscape/portrait direction A is "2", which indicates that the landscape/portrait direction is the portrait direction at 180°, a decision result of the landscape/portrait display decision-making module is portrait display at 180°. If a value of the landscape/portrait direction A is "5", which indicates that the landscape/portrait direction is the landscape direction at 270°, a decision result of the landscape/portrait display decision-making module is landscape display at 270°. If a value of the landscape/portrait direction A is "-1", which indicates that the landscape/portrait direction is an unknown direction, a decision result of the landscape/portrait display decision-making module is to maintain an original display direction.

The display method provided in this embodiment of this application is mainly used to resolve a problem that landscape display of the mobile phone does not meet the expectation of the user for landscape/portrait display in the scenario in which the user lies on the side and holds the mobile phone. Therefore, the face direction calculation module can calculate the landscape/portrait direction based on the face direction only when the mobile phone is in the landscape side-standing state, and it is unnecessary to continually calculate the landscape/portrait direction based on the face direction, thereby reducing power consumption of the electronic device and increasing a battery life of the electronic device.

It should be noted that, regardless of whether the electronic device changes from another state to the landscape side-standing state or the electronic device always maintains the landscape side-standing state, the face direction calculation module needs to calculate the landscape/portrait direction based on the face direction. If no face is recognized or there is an abnormality in the face recognition, the face direction calculation module cannot determine a corresponding landscape/portrait state. In this case, when making a decision on the screen display direction, the landscape/portrait display decision-making module maintains the original display direction. If a plurality of faces are recognized, and if a face direction of a real user of the electronic device can be recognized, the landscape/portrait direction is calculated based on the face direction, for reference by the landscape/portrait display decision-making module to make the display direction decision. If a plurality of faces are recognized, and if the face direction of the real user of the electronic device cannot be recognized, the landscape/portrait direction output by the face direction calculation module is unknown. In this case, when making a decision on the screen display direction, the landscape/portrait display decision-making module maintains the original display direction.

In addition, if the electronic device is not in an unlocked screen-on state, for example, screen-off, AOD, a lock screen mode, a smart cover mode, or an accidental touch prevention mode, the face direction calculation module does not need to calculate the landscape/portrait direction based on the face direction, to reduce high power consumption caused by continual face direction detection. If an APP, for example, a browser, currently displayed by the electronic device does not support screen rotation, the face direction calculation module does not need to calculate the landscape/portrait direction based on the face direction, to reduce high power consumption caused by continual face direction detection.

In addition, if the user locks a rotation state of an application (which supports screen rotation), or the user does not need the screen to rotate with the face, for example, in a navigation scenario, or a current environment (for example, with dark light) is not suitable for running a face recognition algorithm, the face direction calculation module does not need to calculate the landscape/portrait direction based on the face direction, either, to reduce high power consumption caused by continual face direction detection.

Therefore, the face direction calculation module needs to calculate the landscape/portrait direction based on the face direction only when the electronic device switches to the landscape side-standing state or is in the landscape side-standing state and a foreground APP supports landscape/portrait auto-rotation.

In this embodiment of this application, power consumption caused by the landscape/portrait direction calculation module for calculating, based on the acceleration data and the angular velocity data, the landscape/portrait direction of the electronic device and whether the electronic device is in the landscape side-standing state is extremely low, and can be ignored. The landscape/portrait direction calculation module can run in real time in all scenarios after the electronic device turns on the screen.

However, if the face direction calculation module also runs in real time after the electronic device turns on the screen, the electronic device needs to collect an image at a specific frequency and run a related face recognition algorithm, which significantly increases power consumption.

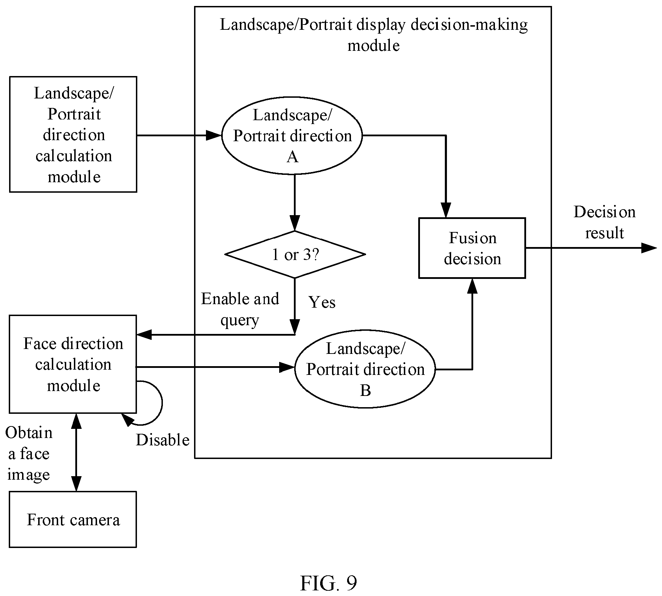

To resolve a problem of high power consumption caused by continually calculating the landscape/portrait direction based on the face direction by the face direction calculation module, FIG. 9 shows an example of an implementation. As shown in FIG. 9, after receiving the landscape/portrait direction A output by the landscape/portrait direction calculation module, the landscape/portrait display decision-making module determines whether the value of the landscape/portrait direction A is "1" or "3", and determines whether the electronic device is currently in the landscape side-standing state, and if yes, sends an enable and detection result query instruction to the face direction calculation module. After receiving the instruction, the face direction calculation module starts running, obtains an image collected by the front camera and performs a face recognition operation, determines the landscape/portrait direction B corresponding to the face direction, and sends the landscape/portrait direction B to the landscape/portrait display decision-making module, so that the landscape/portrait display decision-making module performs fusion decision processing. After the landscape/portrait direction B is sent to the landscape/portrait display decision-making module, the face direction calculation module is disabled and no longer runs, thereby reducing a problem of high power consumption caused by long-term running of the face direction calculation module. Further, the landscape/portrait display decision-making module may make a fusion decision based on the landscape/portrait direction A and the landscape/portrait direction B to obtain a corresponding decision result. For logic of the fusion decision, refer to the logic shown in FIG. 8C. Details are not described herein again. After the landscape/portrait display decision-making module receives the landscape/portrait direction A output by the landscape/portrait direction calculation module, if the value of the landscape/portrait direction A is neither "1" nor "3", the face direction calculation module remains in a disabled state until the enable instruction is received.

In the implementation shown in FIG. 9, the landscape/portrait display decision-making module determines, based on an output of the landscape/portrait direction calculation module, whether the electronic device is currently in the landscape side-standing state. If the output of the landscape/portrait direction calculation module cannot indicate whether the electronic device is currently in the landscape side-standing state (as shown in FIG. 3C), the landscape/portrait display decision-making module may alternatively determine, based on an output of the landscape side-standing recognition module, whether the electronic device is currently in the landscape side-standing state, and send an enable and detection result query instruction to the face direction calculation module when the electronic device is currently in the landscape side-standing state.

To implement the implementation shown in FIG. 9, a hardware chip corresponding to the face direction calculation module needs to meet a specific high performance requirement, to prevent the face direction calculation module from being unable to output, in a timely manner due to the face direction calculation module taking a relatively long time to start running, the landscape/portrait direction determined based on the face direction.

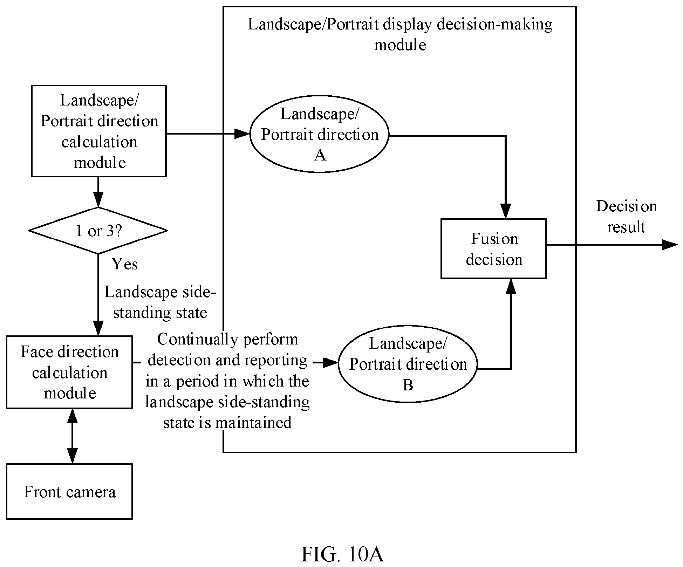

To resolve a problem of high power consumption caused by continually calculating the landscape/portrait direction based on the face direction by the face direction calculation module, FIG. 10A shows an example of an implementation. As shown in FIG. 10A, after the landscape/portrait direction A output by the landscape/portrait direction calculation module is received, it is determined whether the value of the landscape/portrait direction A is "1" or "3", and whether the electronic device is currently in the landscape side-standing state. If yes, indication information that the electronic device is currently in the landscape side-standing state is sent to the face direction calculation module. When determining that the electronic device is currently in the landscape side-standing state, the face direction calculation module continually reports the landscape/portrait direction determined based on the face direction to the landscape/portrait display decision-making module, so that the landscape/portrait display decision-making module can make a fusion decision based on the landscape/portrait direction A and the landscape/portrait direction B to obtain a corresponding decision result. For logic of the fusion decision, refer to the logic shown in FIG. 8C. Details are not described herein again.

In this implementation, the face direction calculation module continually reports, only in a period in which the electronic device maintains the landscape side-standing state, the landscape/portrait direction determined based on the face direction to the landscape/portrait display decision-making module, to ensure that duration of continual detection of the face direction calculation module is minimized. If the electronic device is not in the landscape side-standing state, the face direction calculation module no longer needs to perform face direction-based landscape/portrait detection. In this case, the face direction calculation module may be disabled and no longer run.

In the implementation shown in FIG. 10A, the face direction calculation module determines, based on the indication information of the landscape/portrait direction calculation module, whether the electronic device is currently in the landscape side-standing state. If an output of the landscape/portrait direction calculation module cannot indicate whether the electronic device is currently in the landscape side-standing state (as shown in FIG. 3C), the face direction calculation module may alternatively determine, based on an output of the landscape side-standing recognition module, whether the electronic device is currently in the landscape side-standing state.

It is considered that when the electronic device is in the landscape side-standing state, it is unnecessary to perform the face direction-based landscape/portrait detection in some scenarios neither, for example, a lock screen scenario, a navigation scenario, and a scenario in which a foreground APP does not support screen auto-rotation. Therefore, to further reduce power consumption caused by face detection, the upper layer may add a screen rotation requirement detection module, configured to detect whether there is a landscape/portrait rotation requirement in a current scenario. When an output of the screen rotation requirement detection module indicates that there is the landscape/portrait rotation requirement in the current scenario, for example, a screen rotation requirement value is "1", in a period in which the electronic device is in the landscape side-standing state, the face direction calculation module continually reports the landscape/portrait direction determined based on the face direction to the landscape/portrait display decision-making module. When an output of the screen rotation requirement detection module indicates that there is no landscape/portrait rotation requirement in the current scenario, for example, a screen rotation requirement value is "0", the face direction calculation module does not need to perform the face direction-based landscape/portrait detection in the period in which the electronic device is in the landscape side-standing state. In this case, the face direction calculation module may be disabled and no longer run.

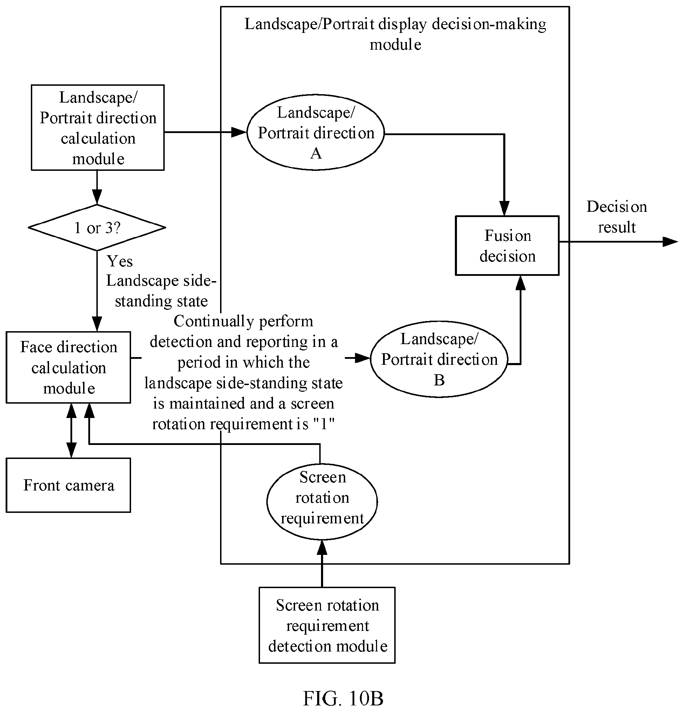

As shown in FIG. 10B, after the landscape/portrait direction A output by the landscape/portrait direction calculation module is received, it is determined whether the value of the landscape/portrait direction A is "1" or "3", and whether the electronic device is currently in the landscape side-standing state. If yes, indication information that the electronic device is currently in the landscape side-standing state is sent to the face direction calculation module. In addition, the screen rotation requirement detection module detects whether the face direction-based landscape/portrait detection needs to be performed in the current scenario, and sends a screen rotation requirement value to the landscape/portrait display decision-making module. In addition, the landscape/portrait display decision-making module or the screen rotation requirement detection module sends the screen rotation requirement value to the face direction calculation module.

When the face direction calculation module determines that the electronic device is currently in the landscape side-standing state, and the screen rotation requirement value indicates that there is currently a landscape/portrait rotation requirement (for example, "1"), the landscape/portrait direction determined based on the face direction is continually reported to the landscape/portrait display decision-making module, so that the landscape/portrait display decision-making module can make a fusion decision based on the landscape/portrait direction A and the landscape/portrait direction B to obtain a corresponding decision result. For logic of the fusion decision, refer to the logic shown in FIG. 8C. Details are not described herein again.

When the face direction calculation module determines that the electronic device is currently in the landscape side-standing state, and the screen rotation requirement value indicates that there is no landscape/portrait rotation requirement (for example, "0"), the face direction calculation module does not need to perform the face direction-based landscape/portrait detection. In this case, the face direction calculation module may be disabled and no longer run.

Similarly, in an implementation shown in FIG. 10B, the face direction calculation module determines, based on the indication information of the landscape/portrait direction calculation module, whether the electronic device is currently in the landscape side-standing state. If an output of the landscape/portrait direction calculation module cannot indicate whether the electronic device is currently in the landscape side-standing state (as shown in FIG. 3C), the face direction calculation module may alternatively determine, based on an output of the landscape side-standing recognition module, whether the electronic device is currently in the landscape side-standing state.

In view of complex and diverse scenarios in which the user uses the electronic device, whether there is the landscape/portrait rotation requirement in the current scenario may frequently change. For example, for two APPs between which the user frequently switches, one APP supports the landscape/portrait auto-rotation, and the other APP does not support the landscape/portrait auto-rotation. In this case, whether the face direction calculation module needs to perform the face direction-based landscape/portrait detection may also frequently change. If the face direction calculation module is disabled when the face direction calculation module does not need to perform the face direction-based landscape/portrait detection, there possibly is a problem that the face direction calculation module cannot output a detection result in a timely manner due to the face direction calculation module taking a relatively long time to start running. In this case, if the landscape/portrait display decision-making module waits for an output result of the face direction calculation module and then makes the fusion decision, landscape/portrait rotation experience during scenario switching becomes very slow.

To resolve this problem and minimize high power consumption caused by the face direction-based landscape/portrait detection, in an optional implementation, even if the face direction calculation module does not need to report the detection result to the landscape/portrait display decision-making module, the face direction-based landscape/portrait detection is not stopped, but the face direction-based landscape/portrait detection is performed in an interval sampling manner.

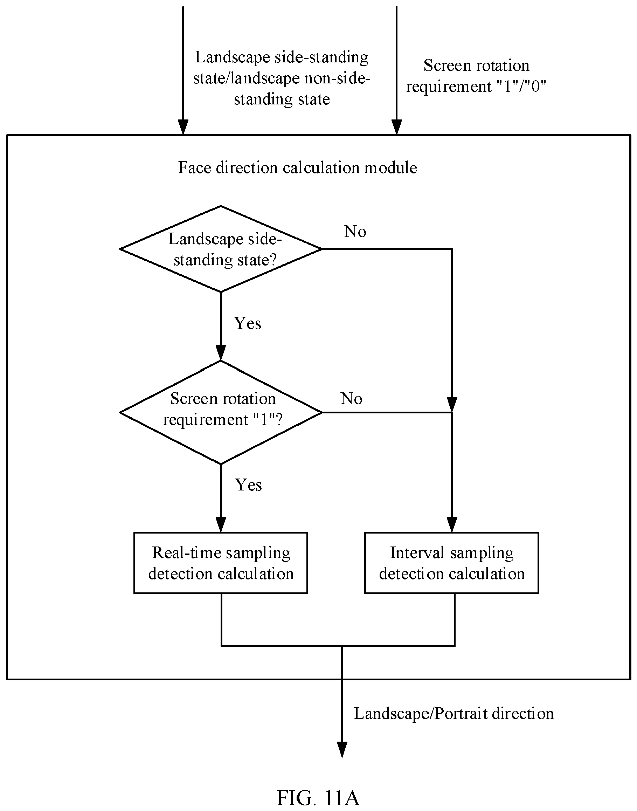

In this implementation, if the face direction calculation module needs to continually report the landscape/portrait direction determined based on the face direction to the landscape/portrait display decision-making module, for example, the electronic device is in the landscape side-standing state and the screen rotation requirement value is "1", the face direction calculation module performs real-time sampling to perform the face direction-based landscape/portrait detection. Refer to FIG. 11A. If the face direction calculation module does not need to report the landscape/portrait direction determined based on the face direction to the landscape/portrait display decision-making module, for example, the electronic device is not in the landscape side-standing state or the screen rotation requirement value is "0", the face direction calculation module performs interval sampling to perform the face direction-based landscape/portrait detection. Refer to FIG. 11A.

Modes in which the face direction calculation module performs the face direction-based landscape/portrait detection need to switch between a real-time sampling detection calculation mode and an interval sampling detection calculation mode.

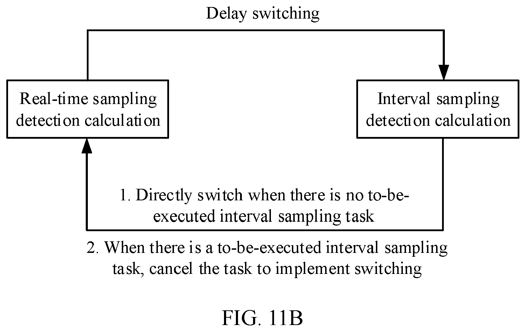

As shown in FIG. 11B, when a current detection mode of the face direction calculation module is the real-time sampling detection calculation mode, if it is necessary to switch to the interval sampling detection calculation mode, switching is performed in a switching delay manner. For example, when determining that the current detection mode needs to be switched from the real-time sampling detection calculation mode to the interval sampling detection calculation mode, the face direction calculation module obtains delay duration (for example, several seconds), and then switches the real-time sampling detection calculation mode to the interval sampling detection calculation mode when timing reaches the delay duration.

As shown in FIG. 11B, when a current detection mode of the face direction calculation module is the interval sampling detection calculation mode, if it is necessary to switch to the real-time sampling detection calculation mode, it is determined whether there is currently a to-be-executed interval sampling task. If there is currently no to-be-executed interval sampling task, the interval sampling detection calculation mode is immediately switched to the real-time sampling detection calculation mode. If there is currently the to-be-executed interval sampling task, the to-be-executed interval sampling task is canceled, to directly switch the interval sampling detection calculation mode to the real-time sampling detection calculation mode.

When the face direction calculation module uses the real-time sampling detection calculation mode, a buffered value of the landscape/portrait direction corresponding to the face direction is a value, of the landscape/portrait direction, obtained through most recent detection calculation. When the face direction calculation module uses the interval sampling detection calculation mode, after the value, of the landscape/portrait direction, obtained through most recent detection calculation is sent to the landscape/portrait display decision-making module for the landscape/portrait display decision-making module to complete the fusion decision, the buffered value of the landscape/portrait direction corresponding to the face direction may be "-2", to indicate that the face direction calculation module cannot provide a valid vote in this case. In this case, the landscape/portrait display decision-making module may make a decision that the original display direction needs to be maintained currently.

For a case in which the interval sampling detection calculation mode or the real-time sampling detection calculation mode of the face direction calculation module takes effect, an AP (application processor, application processor) side sends a corresponding sampling request to a sensor subsystem side corresponding to the face direction calculation module. When the real-time sampling detection calculation mode takes effect, the sampling request is a real-time sampling request. When the interval sampling detection calculation mode takes effect, the sampling request is an interval sampling request. For example, the real-time sampling request includes but is not limited to a real-time mode identifier and a real-time mode sampling interval (a value is 0, indicating that there is no interval). The interval sampling request includes but is not limited to an interval mode identifier and an interval mode sampling interval (in a unit of millisecond). Further, the sensor subsystem side corresponding to the face direction calculation module may complete a corresponding mode configuration based on the corresponding sampling request, and perform a face direction-based landscape/portrait detection operation in a corresponding sampling mode.

In a scenario in which the face direction calculation module needs to continually report the detection result to the landscape/portrait display decision-making module, a real-time sampling detection calculation solution is used, and there is definitely no problems with user experience in a real-time sampling period. In a scenario in which the face direction calculation module does not need to report the detection result to the landscape/portrait display decision-making module, an interval sampling detection calculation solution is used. An example in which the face direction calculation module works for 500 ms every 10 seconds to output one frame of face direction detection result is used. Because working duration of the face direction calculation module decreases to 1/20 of original working duration, power consumption of the face direction calculation module also decreases to 1/20 of original power consumption. Therefore, power consumption can be significantly reduced effectively.

In terms of a function, the face direction is sampled once every 10 seconds to enable the landscape/portrait display decision-making module to update a landscape/portrait display state. Therefore, no matter how to switch an application scenario, secondary rotation of the screen does not occur as long as a relative relationship between the face and the landscape/portrait state does not change. An experience problem of secondary rotation occurs only when in an interval period (for example, 10 seconds) of sampling, there is a difference between the landscape/portrait direction detected based on the face direction and the landscape/portrait direction detected based on the gravity direction, for example, the user rotates the mobile phone to enable the landscape/portrait direction detected based on the face direction to be inconsistent with the landscape/portrait direction detected based on the gravity direction.

In this way, in this implementation, power consumption is reduced to be close to a theoretical value for stopping detection, and false triggering of the secondary rotation is reduced to a probability at which the secondary rotation may be triggered only by a special operation within a sampling interval, that is, a probability of the secondary rotation is controlled in a very small competitive scenario, to balance device power consumption and user experience as much as possible.

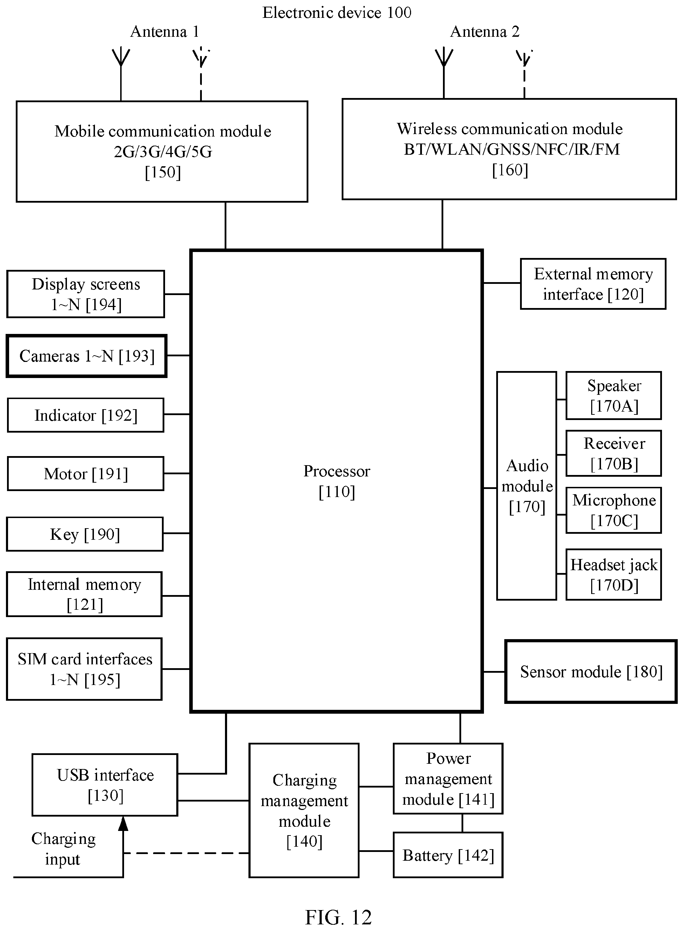

FIG. 12 is a schematic diagram of a structure of an electronic device 100. Optionally, the electronic device 100 may be a terminal, which may also be referred to as a terminal device. The terminal may be a portable handheld terminal device such as a mobile phone or a portable android device (pad). This is not limited in this application. It should be understood that the electronic device 100 shown in FIG. 12 is only an example of an electronic device, and the electronic device 100 may have more or fewer components than those shown in the figure, may combine two or more components, or may have different component configurations. The various components shown in FIG. 12 may be implemented in hardware that includes one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, and a subscriber identity module (subscriber identity module, SIM) card interface 195, and the like. The sensor module 180 may include a pressure sensor, a gyroscope sensor, an acceleration sensor, a temperature sensor, a motion sensor, a barometric pressure sensor, a magnetic sensor, a distance sensor, an optical proximity sensor, a fingerprint sensor, a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache memory.

The USB interface 130 is an interface that complies with USB standard specifications, and may be specifically a Mini USB interface, a Micro USB interface, a USB Type C interface, or the like. The USB interface 130 may be configured to be connected to a charger to charge the electronic device 100, may be configured to transmit data between the electronic device 100 and a peripheral device, or may be configured to be connected to a headset to play audio through the headset. The interface may alternatively be configured to be connected to another electronic device, for example, an AR device.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display screen 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a solution applied to the electronic device 100 for wireless communication including 2G/3G/4G/5G and the like. The mobile communication module 150 may include at least one filter, switch, power amplifier, low noise amplifier (low noise amplifier, LNA), and the like.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 implements a display function by using the GPU, the display screen 194, the application processor, and the like. The GPU is a microprocessor for image processing and is connected to the display screen 194 and the application processor. The GPU is configured to perform mathematical and geometric calculation for graphics rendering. The processor 110 may include one or more GPUs, and the one or more GPUs execute program instructions to generate or change displayed information.

The display screen 194 is configured to display an image, a video, and the like. The display screen 194 includes a display panel. In some embodiments, the electronic device 100 may include one or N display screens 194, where N is a positive integer greater than 1.

The electronic device 100 may implement a shooting function by using the ISP, the camera 193, the video codec, the GPU, the display screen 194, the application processor, and the like.

The ISP is configured to process data fed back by the camera 193. For example, during shooting, a shutter is opened, and light is transferred to a photosensitive element of the camera through a lens. An optical signal is converted into an electrical signal. The photosensitive element of the camera transfers the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The external memory interface 120 may be configured to connect to an external memory card, for example, a Micro SD card, to expand a storage capability of the electronic device 100. The external memory card communicates with the processor 110 by using the external memory interface 120, to implement a data storage function.

The internal memory 121 may be configured to store computer-executable program code, and the executable program code includes instructions. The processor 110 runs the instructions stored in the internal memory 121, to execute various function applications and data processing of the electronic device 100, for example, to enable the electronic device 100 to implement the display method in the embodiments of this application. The internal memory 121 may include a program storage area and a data storage area. The program storage area may store an operating system, an application required by at least one function (for example, a sound playing function and an image playing function), and the like. The data storage area may store data (for example, audio data and a phone book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS).

The electronic device 100 may implement an audio function by using the audio module 170, the speaker 170A, the receiver 170B, the microphone 170C, the headset jack 170D, the application processor, and the like. For example, music playing and sound recording are implemented.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A. In some embodiments, a plurality of speakers 170A may be disposed in the electronic device 100.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, reduce noise, further recognize a sound source, implement a directional sound recording function, and so on.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor is configured to sense a pressure signal, and may convert the pressure signal into an electrical signal. In some embodiments, the pressure sensor may be disposed on the display screen 194. The electronic device 100 may also calculate a touch location based on a signal detected by the pressure sensor.

The gyroscope sensor may be configured to determine a motion posture of the electronic device 100. In some embodiments, angular velocities of the electronic device 100 around three axes (namely, an x axis, a y axis, and a z axis) may be determined by using the gyroscope sensor.

The acceleration sensor may detect magnitudes of acceleration in various directions (usually on three axes) of the electronic device 100. The acceleration sensor may detect a magnitude and a direction of gravity when the electronic device 100 is still. The acceleration sensor may be further configured to recognize a posture of the electronic device, and is applied to applications such as landscape/portrait mode switching and a pedometer.

In this embodiment of this application, data collected by a gyroscope and the acceleration sensor may be used to determine a landscape/portrait state of the electronic device and whether the electronic device is in a landscape side-standing state.

The touch sensor is also referred to as a "touch panel". The touch sensor may be disposed on the display screen 194. The touch sensor and the display screen 194 form a touchscreen, which is also referred to as a "touch control screen". The touch sensor is configured to detect a touch operation performed on or near the touch sensor. The touch sensor may transfer the detected touch operation to the application processor to determine a type of a touch event.

The key 190 includes an on/off key (or referred to as a power key), a volume key, or the like. The key 190 may be a mechanical key, or may be a touch key. The electronic device 100 may receive a key input and generate a key signal input related to user settings and function control of the electronic device 100.

The motor 191 may generate a vibration prompt. The motor 191 may be configured to provide a vibration prompt for an incoming call, and may also be configured to provide vibration feedback for a touch. For example, touch operations performed on different applications (for example, shooting and audio playing) may correspond to different vibration feedback effects.

The indicator 192 may be an indicator light, may be configured to indicate a charging status or a power change, and may be further configured to indicate a message, a missed incoming call, a notification, and the like.

A software system of the electronic device 100 may use a layered architecture, an event-driven architecture, a microkernel architecture, a microservice architecture, or a cloud architecture. In embodiments of this application, an Android system with a layered architecture and a Sensor subsystem with a layered architecture are used as an example to describe a software structure of the electronic device 100. The Android system and the Sensor subsystem respectively run on different kernels (for example, an AP kernel and a Sensor HUB kernel), and complete data-command interaction based on inter-kernel communication.

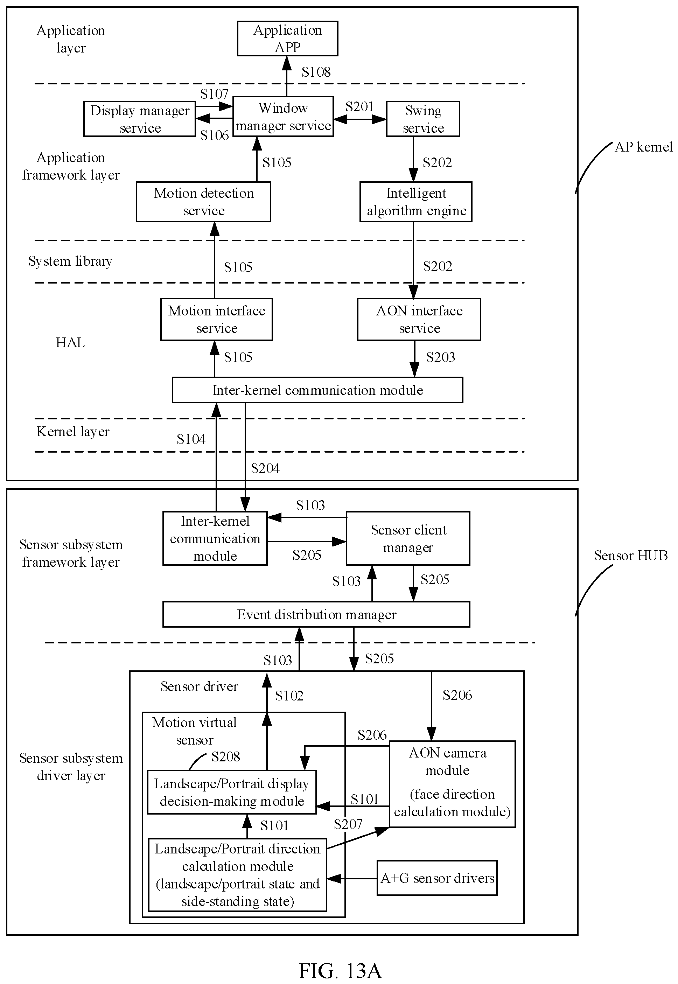

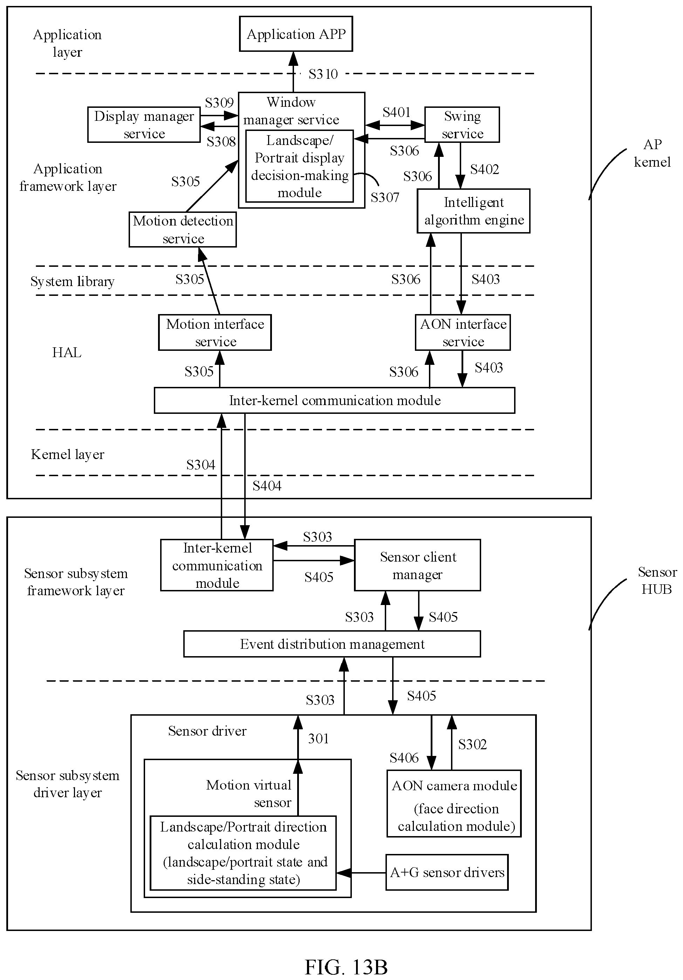

FIG. 13A is a block diagram of a software structure of an electronic device 100 according to an embodiment of this application. FIG. 13B is a block diagram of a software structure of an electronic device 100 according to an embodiment of this application.

On an AP side, in a layered architecture, software is divided into several layers, and each layer has a clear role and task. The layers communicate with each other by using a software interface. In some embodiments, the Android system is divided into five layers: an application layer, an application framework layer, an Android runtime (Android runtime) and system library (library) layer (also referred to as a Native layer), an HAL (Hardware Abstraction Layer, hardware abstraction layer), and a kernel layer from top to down.

The application layer may include a series of application packages.

As shown in FIG. 13A and FIG. 13B, the application packages may include applications APPs, such as Camera, Gallery, WLAN, Bluetooth, Phone, Calendar, Map, Navigation, Music, Video, and Messages. Some APPs support landscape/portrait auto-rotation, and some other APPs do not support landscape/portrait auto-rotation. The APP that supports landscape/portrait auto-rotation may rotate and adjust a display layout based on a landscape/portrait rotation event.

The application framework layer provides an application programming interface (application programming interface, API) and a programming framework for an application at the application layer. The application framework layer includes some predefined functions.

As shown in FIG. 13A, the application framework layer may include a window manager service (Window Manager Service), a display manager service (Display Manager Service), a scenario recognition service (for example, Swing Service), a motion detection service (Motion Detection Service), and an intelligent algorithm engine (AIEngine).

The window manager service is a system service that is used to manage a system window, for example, a window size, a hierarchy, visibility, and a focal point, and transmits related information to the scenario recognition service for scenario determining.

The display manager service is a system service used to manage a display screen of a device, for example, a resolution, DPI, a frame rate, and a direction.

The scenario recognition service may be responsible for processing such as establishing a connection by a system process to a smart sensing service, registering a gesture fence, gesture scenario recognition, and gesture event injection, and is an interface service of the intelligent algorithm engine.

The intelligent algorithm engine, which is an intelligent algorithm module based on an AO (Always On, always on) Camera, implements AP-side algorithm capabilities such as presence or absence of a face and a face orientation, and a path control capability.

The motion detection service may be used to provide some posture recognition functions.

Different from FIG. 13A, in an example shown in FIG. 13B, the window manager service further includes a landscape/portrait display decision-making module. In this embodiment, the landscape/portrait display decision-making module is configured to make a fuse decision on a landscape/portrait display direction based on a landscape/portrait direction determined based on a face direction and a landscape/portrait direction determined based on a gravity direction.

The Android Runtime includes a kernel library and a virtual machine. The Android Runtime is responsible for scheduling and management of the Android system. The kernel library includes two parts: One part is a functional function that needs to be invoked in a java language, and the other part is a kernel library of Android.

The system library may include a plurality of functional modules, for example, a surface manager (surface manager), a media library (Media Library), a three-dimensional graphics processing library (for example, OpenGL ES), and a 2D graphics engine (for example, an SGL).

The HAL is used to abstract underlying hardware to provide an abstracted unified service for an upper layer. The HAL may encapsulate a drive program at the kernel layer, and provide the application framework layer with an interface for invoking, to shield implementation details of low-level hardware. As shown in FIG. 13A and FIG. 13B, the HAL may include a motion (Motion) interface service and an AON interface service. The Motion interface service is used to provide the application framework layer with an interface for invoking a Motion virtual sensor, and the AON interface service is used to provide the application framework layer with an interface for invoking an AON camera module.

The kernel layer is a layer between hardware and software. The kernel layer may include at least a display driver, an audio driver, a Wi-Fi driver, and the like.

Still referring to FIG. 13A, on a Sensor HUB side, in a layered architecture, software is divided into several layers, and each layer has a clear role and task. The layers communicate with each other by using a software interface. In some embodiments, the Sensor subsystem is divided into two layers: a framework layer and a driver layer from top to bottom.

As shown in FIG. 13A and FIG. 13B, the framework layer includes an inter-kernel communication module, a Sensor client manager, and an event distribution manager. The inter-kernel communication module is configured to perform bidirectional communication of data and commands between kernels. The Sensor client manager is configured to manage a Sensor client. The event distribution manager is used to manage event distribution.

As shown in FIG. 13A, the driver layer includes a Sensor driver, and the Sensor driver includes a Motion virtual sensor, the AON camera module, and A (ACC, acceleration sensor)+G (Gyro, gyroscope) sensor drivers.

The Motion virtual sensor runs a Sensor fusion algorithm in a Sensor HUB, and provides some advanced posture recognition functions. For example, an orientation of the mobile phone is implemented by using the Motion fusion algorithm. As shown in FIG. 13A, the Motion virtual sensor includes a landscape/portrait direction calculation module and a landscape/portrait display decision-making module.

In this embodiment, the landscape/portrait display decision-making module is configured to make a fuse decision on a landscape/portrait display direction based on a landscape/portrait direction determined based on a face direction and a landscape/portrait direction determined based on a gravity direction.

The landscape/portrait direction calculation module may perform landscape/portrait detection and landscape side-standing state detection based on the gravity direction, that is, perform the landscape/portrait detection and the landscape side-standing state detection based on acceleration data collected by the acceleration sensor and angle data collected by the gyroscope sensor.

The AON camera module is configured to provide an image sequence of gestures or faces based on continual image collection in a Camera AON mode. In this application, a function corresponding to the foregoing face direction calculation module may be implemented, that is, a face direction in an image is recognized, and a landscape/portrait direction of the electronic device is determined based on the face direction.

Different from FIG. 13A, in the example shown in FIG. 13B, the Motion virtual sensor includes only a landscape/portrait direction calculation module, and the landscape/portrait display decision-making module is provided on the AP side.

In an example, an implementation shown in FIG. 13A may be used for the display method provided in this application, and a data processing procedure of the display method may include the following steps.

S101: The landscape/portrait direction calculation module determines a landscape/portrait direction A of the electronic device based on acceleration data and angular velocity data, and sends the landscape/portrait direction A to the landscape/portrait display decision-making module; and the AON camera module collects image data and recognizes a face direction, determines a landscape/portrait direction B of the electronic device based on the face direction, and sends the landscape/portrait direction B to the landscape/portrait display decision-making module.

S102: The landscape/portrait display decision-making module makes a fusion decision based on the landscape/portrait direction A and the landscape/portrait direction B to determine a target landscape/portrait display direction, and sends the target landscape/portrait display direction to the Sensor driver by using the Motion virtual sensor.

S103: The Sensor driver sends the target landscape/portrait display direction to the inter-kernel communication module in the Sensor HUB by using the event distribution manager and the Sensor client manager.

S104: The inter-kernel communication module in the Sensor HUB sends the target landscape/portrait display direction to an inter-kernel communication module on the AP side.

S105: The inter-kernel communication module on the AP side sends the target landscape/portrait display direction to the window manager service by using the Motion interface service and the Motion detection service.

S106: The window manager service determines a target screen rotation direction based on the received target landscape/portrait display direction, a landscape/portrait display request of a foreground APP, and a landscape/portrait display direction supported by the foreground APP, and notifies the display manager service of the target screen rotation direction for interface rotation.

It should be noted that, in actual use, video software such as iQIYI, YouKu, and Tencent Video all register A+G sensors of the applications, independently calculate a landscape/portrait state, and request a to-be-rotated landscape/portrait display direction (namely, a landscape/portrait display request) from the system. That is, in such a scenario, the Motion detection service makes a landscape/portrait display direction corresponding to the landscape/portrait display request of the foreground APP effective.

S107: The display manager service updates related data such as display resolution, and triggers the window manager service to refresh all windows of the system to implement window rotation.

S108: The window manager service notifies, by using a Config Change mechanism, the foreground application to redraw a display interface based on a target display direction corresponding to the target screen rotation direction.

An execution sequence of steps in the foregoing procedure is not limited in this application, and may be specifically determined based on an actual scenario. For details that are not described in the foregoing procedure, refer to the foregoing descriptions and the conventional technology. Details are not described herein again.

The implementation shown in FIG. 13A may be used for the display method provided in this application, and a control command processing procedure in which the AP side determines whether landscape/portrait detection needs to be performed based on the face direction may include the following steps.

S201: The Swing service obtains application rotation requirement information from modules such as the window manager service.

S202: The Swing service sends the application rotation requirement information to the AON interface service by using the intelligent algorithm engine.

S203: The AON interface service sends the application rotation requirement information to the inter-kernel communication module on the AP side.

S204: The inter-kernel communication module on the AP side sends the application rotation requirement information to the inter-kernel communication module in the Sensor HUB.

S205: The inter-kernel communication module in the Sensor HUB sends the application rotation requirement information to the Sensor driver by using the Sensor client manager and the event distribution manager.

S206: The Sensor driver sends the application rotation requirement information to the AON camera module, and the AON camera module determines, based on the application rotation requirement information, whether it is necessary to continue to perform the landscape/portrait detection based on the face direction, and sends the application rotation requirement information to the Motion virtual sensor.

S207: The landscape/portrait direction calculation module on the Motion virtual sensor side notifies the AON camera module when the electronic device enters or exits a landscape side-standing state, and the AON camera module determines, based on landscape side-standing state information, whether it is necessary to continue to perform the landscape/portrait detection based on the face direction.

S208: When the landscape/portrait display decision-making module on the Motion virtual sensor side determines, based on the application rotation requirement information when making a decision on the landscape/portrait display direction, whether it is necessary to refer to the landscape/portrait direction determined based on the face direction.

An execution sequence of steps in the foregoing procedure is not limited in this application, and may be specifically determined based on an actual scenario. For details that are not described in the foregoing procedure, refer to the foregoing descriptions and the conventional technology. Details are not described herein again.

In addition, it should be noted that all paths between the modules shown in FIG. 13A are bidirectional paths, and an arrow direction shown in FIG. 13A is only a schematic direction of data transmission or command transmission. This is not limited in this embodiment of this application. In addition, a real-time sampling instruction and an interval sampling instruction that correspond to the AON camera module may be sent by the AP side to the AON camera module on the Sensor HUB side in a corresponding command transmission path.

In this way, in the implementation shown in FIG. 13A, a face direction-based landscape/portrait detection fusion decision is implemented on a CP (a baseband chip and a coprocessor) side, time consumed by a communication link is shortest, and continual detection does not cause a problem of high power consumption. However, such a setting relies on a detection ability, for the face direction, of the CP side of a chip platform, and is limited by the chip platform. When the Sensor subsystem does not support face direction detection, implementing a face direction fusion decision on the CP side is unfriendly to expansibility on the AP side.

In another example, an implementation shown in FIG. 13B may alternatively be used for the display method provided in this application, and a data processing procedure of the display method may include the following steps.

S301: The landscape/portrait direction calculation module determines a landscape/portrait direction A of the electronic device based on acceleration data and angular velocity data, and sends the landscape/portrait direction A to the Sensor driver by using the Motion virtual sensor.

S302: The AON camera module collects image data and recognizes a face direction, and sends a landscape/portrait direction B determined based on the face direction to the Sensor driver.

S303: The Sensor driver sends the landscape/portrait direction A and the landscape/portrait direction B to the inter-kernel communication module in the Sensor HUB by using the event distribution manager and the Sensor client manager.

S304: The inter-kernel communication module in the Sensor HUB sends the landscape/portrait direction A and the landscape/portrait direction B to an inter-kernel communication module on the AP side.

S305: The inter-kernel communication module on the AP side sends the landscape/portrait direction A to the window manager service by using the Motion interface service and the Motion detection service.

S306: The inter-kernel communication module on the AP side sends the landscape/portrait direction B to the landscape/portrait display decision-making module in the window manager service by using the AON interface service, the intelligent algorithm engine, and the Swing service.

S307: The landscape/portrait display decision-making module makes a fusion decision based on the landscape/portrait direction A and the landscape/portrait direction B, determines a target landscape/portrait display direction, and notifies the window manager service of the target landscape/portrait display direction.

S308: The window manager service determines a target screen rotation direction based on the target landscape/portrait display direction, a landscape/portrait display request of a foreground APP, and a landscape/portrait display direction supported by the foreground APP, and notifies the display manager service of the target screen rotation direction for interface rotation.

S309: The display manager service updates related data such as display resolution, and triggers the window manager service to refresh all windows of the system to implement window rotation.

S310: The window manager service notifies, by using a Config Change mechanism, the foreground application to redraw a display interface based on a target display direction corresponding to the target screen rotation direction.

An execution sequence of steps in the foregoing procedure is not limited in this application, and may be specifically determined based on an actual scenario. For details that are not described in the foregoing procedure, refer to the foregoing descriptions and the conventional technology. Details are not described herein again.

The implementation shown in FIG. 13B may be used for the display method provided in this application, and a control command processing procedure in which the AP side determines whether landscape/portrait detection needs to be performed based on the face direction may include the following steps.

S401: The Swing service obtains application rotation requirement information from modules such as the window manager service.

S402: The Swing service sends the application rotation requirement information to the AON interface service by using the intelligent algorithm engine.

S403: The AON interface service sends the application rotation requirement information to the inter-kernel communication module on the AP side.

S404: The inter-kernel communication module on the AP side sends the application rotation requirement information to the inter-kernel communication module in the Sensor HUB.

S405: The inter-kernel communication module in the Sensor HUB sends the application rotation requirement information to the Sensor driver by using the Sensor client manager and the event distribution manager.

S406: The Sensor driver sends the application rotation requirement information to the AON camera module, and the AON camera module determines, based on the application rotation requirement information, whether it is necessary to continue to perform the landscape/portrait detection based on the face direction.

An execution sequence of steps in the foregoing procedure is not limited in this application, and may be specifically determined based on an actual scenario. For details that are not described in the foregoing procedure, refer to the foregoing descriptions and the conventional technology. Details are not described herein again.

In addition, it should be noted that all paths between the modules shown in FIG. 13B are bidirectional paths, and an arrow direction shown in FIG. 13B is only a schematic direction of data transmission or command transmission. This is not limited in this embodiment of this application. In addition, a real-time sampling instruction and an interval sampling instruction that correspond to the AON camera module may be sent by the AP side to the AON camera module on the Sensor HUB side in a corresponding command transmission path.

In this way, in the implementation shown in FIG. 13B, a face direction-based landscape/portrait detection fusion decision is implemented on the AP side. The solution has relatively good expansibility and is compatible with a scenario in which the face direction detection is performed on both the AP side and the coprocessor side. However, from triggering on the AP side to receiving a detection result, time consumption of inter-kernel communication is increased, user experience is not affected, time consumption is not optimal, and continual detection causes a problem of high power consumption.

The implementation shown in FIG. 13B may meet a high-power-consumption Camera solution on the AP side. It only needs to control continual detection time to be within very short time (for example, 15 seconds) after the face direction-based landscape/portrait detection is triggered every time and a result of the first detection is returned, so that the landscape/portrait display decision-making module has enough time to consider a face direction-based landscape/portrait detection result. This case only sacrifices low-frequency use experience in which content displayed on the mobile phone before and after landscape side-standing does not change but the face orientation changes. Similarly, in all scenarios in which the landscape/portrait state changes, the face direction may be detected in short time, and the face direction is preferential. However, the interface rotation is triggered only when the rotation direction changes, thereby supporting logic of preferring the face direction in all the scenarios.

In still another example, an implementation solution shown in FIG. 13A may be used for the display method provided in this application, and an AP side solution shown in FIG. 13B is compatible in a system design. Details are not described herein.

It may be understood that the layers in the software structure shown in FIG. 13A and FIG. 13B and the components included in the layers do not constitute a specific limitation on the electronic device 100. In some other embodiments of this application, the electronic device 100 may include more or fewer layers than those shown in the figure, and each layer may include more or fewer components. This is not limited in this application.

It may be understood that, to implement the display method in the embodiments of this application, the electronic device includes corresponding hardware and/or software modules for performing various functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint condition of the technical solutions. A person skilled in the art may use different methods to implement the described functions with reference to embodiments for each particular application, but it should not be considered that the implementation goes beyond the scope of this application.

An embodiment further provides a computer storage medium. The computer storage medium stores computer instructions. When the computer instructions are run on an electronic device, the electronic device is enabled to perform the foregoing related method steps to implement the display method in the foregoing embodiments.

An embodiment further provides a computer program product. When the computer program product runs on a computer, the computer is enabled to perform the foregoing related steps to implement the display method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the display method in the foregoing method embodiments.

The electronic device (for example, a mobile phone), the computer storage medium, the computer program product, or the chip provided in the embodiments is configured to perform the corresponding method provided above. Therefore, for beneficial effects that can be achieved by the electronic device, the computer storage medium, the computer program product, or the chip, refer to beneficial effects in the corresponding method provided above. Details are not described herein again.

It may be understood by a person skilled in the art from the foregoing descriptions of the implementations that, for convenience and brevity of description, division of the foregoing functional modules is merely used as an example for description. In actual application, the foregoing functions may be allocated to different functional modules as required for implementation, that is, an internal structure of the apparatus is divided into different functional modules, to complete all or some of the functions described above.

In the several embodiments provided in this application, it should be understood that the disclosed apparatus and method may be implemented in another manner. For example, the described apparatus embodiment is merely an example. For example, the division into the modules or units is merely a logical function division, and there may be another division manner in actual implementation. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. A display method, applied to an electronic device, and comprising:
obtaining, when the electronic device is in or enters a landscape side-standing state, a first landscape/portrait direction of the electronic device determined based on a face direction; and
if the first landscape/portrait direction is a portrait direction, setting a screen display direction of the electronic device to portrait display,
wherein the landscape side-standing state includes a landscape state and a side-standing state, wherein the side-standing state is a state in which a display screen of the electronic device is perpendicular to ground,
wherein the method further comprises:
when the electronic device exits the landscape side-standing state or is in a landscape non-side-standing state, obtaining a second landscape/portrait direction of the electronic device determined based on a gravity direction; and
determining the screen display direction of the electronic device based on the second landscape/portrait direction.

2. The method according to claim 1, wherein the obtaining a first landscape/portrait direction of the electronic device determined based on a face direction comprises:
obtaining the face direction recognized based on image data collected by a front camera; and
determining the first landscape/portrait direction based on an included angle α between the face direction and a natural direction of the electronic device, wherein
the natural direction of the electronic device is a direction from a lower end of the electronic device to an upper end, and the upper end is an end at which the front camera and a rear camera are located.

3. The method according to claim 2, wherein the determining the first landscape/portrait direction based on an included angle between the face direction and a natural direction of the electronic device comprises:
when α∈ (0°-β, 0°+β), the first landscape/portrait direction is a portrait direction at 0°;
when α∈ (90°-β, 90°+β), the first landscape/portrait direction is a landscape direction at 90°;
when α∈ (180°-β, 180°+β), the first landscape/portrait direction is a portrait direction at 180°; or
when α∈ (270°-β, 270°+β), the first landscape/portrait direction is a landscape direction at 270°, wherein
β indicates a direction recognition range threshold, and β is greater than 0° and less than 45°.

4. The method according to claim 3, wherein the determining the first landscape/portrait direction based on an included angle between the face direction and a natural direction of the electronic device further comprises:
when α∈ [β, 90°-β], α∈ [90°+β, 180°-B], α∈ [180°+β, 270°-β], or α∈ [270°+β, 360°-β], a value of the first landscape/portrait direction indicates unknown.

5. The method according to claim 3 or 4, wherein an angular resolution at which a chip platform used by the electronic device performs face direction recognition is 30°, and β=30°.

6. The method according to claim 2, further comprising:
obtaining, when the electronic device is in or enters the landscape side-standing state, the image data collected by the front camera; and
performing face direction recognition based on the image data.

7. The method according to claim 6, wherein the performing face direction recognition based on the image data comprises:
if only one face is recognized based on the image data, performing face direction recognition on the one face.

8. The method according to claim 7, further comprising:
if no face is recognized or a plurality of faces are recognized based on the image data, or there is an abnormality in recognition, determining that a value of the first landscape/portrait direction indicates unknown.

9. The method according to claim 4 or 8, further comprising:
if the value of the first landscape/portrait direction indicates unknown, maintaining a current screen display direction of the electronic device.

10. The method according to claim 3, further comprising:
if the first landscape/portrait direction is a landscape direction, maintaining a current screen display direction of the electronic device, wherein
the landscape direction comprises the landscape direction at 90° and the landscape direction at 270°.

11. The method according to claim 6, wherein the obtaining, when the electronic device is in or enters a landscape side-standing state, the image data collected by the front camera comprises:
when the electronic device is in or enters the landscape side-standing state, and there is a landscape/portrait auto-rotation requirement in a current scenario, obtaining the image data collected by the front camera.

12. The method according to claim 6 or 11, wherein the image data collected by the front camera is obtained in a real-time sampling manner.

13. An electronic device (100), comprising:
one or more processors (110);
a memory; and
one or more computer programs, wherein the one or more computer programs are stored in the memory, and when the computer programs are executed by the one or more processors, the electronic device (100) is enabled to perform the display method according to any one of claims 1-12.

14. A computer-readable storage medium, comprising a computer program, wherein when the computer program is run on an electronic device, the electronic device is enabled to perform the display method according to any one of claims 1-12.

## Patentansprüche

1. Anzeigeverfahren, das auf ein elektronisches Gerät angewendet wird und Folgendes umfasst:
Ermitteln einer ersten Quer-/Hochformatausrichtung des elektronischen Geräts, die basierend auf einer Gesichtsrichtung bestimmt wird, wenn sich das elektronische Gerät in einem Quer-/Seitenstand-Zustand befindet oder in diesen eintritt; und
Einstellen einer Bildschirmanzeigerichtung des elektronischen Geräts auf Hochformatanzeige, wenn die erste Quer-/Hochformatausrichtung eine Hochformatausrichtung ist,
wobei der Quer-/Seitenstand-Zustand einen Querzustand und einen Seitenstand-Zustand umfasst, wobei der Seitenstand-Zustand ein Zustand ist, in dem ein Anzeigebildschirm des elektronischen Geräts senkrecht zum Boden steht,
wobei das Verfahren ferner umfasst:
Ermitteln einer zweiten Quer-/Hochformatausrichtung des elektronischen Geräts, die basierend auf einer Schwerkraftrichtung bestimmt wird, wenn das elektronische Gerät den Quer-/Seitenstand-Zustand verlässt oder sich in einem Quer-Nicht-Seitenstand-Zustand befindet; und
Bestimmen der Bildschirmanzeigerichtung des elektronischen Geräts basierend auf der zweiten Quer-/Hochformatausrichtung.

2. Verfahren nach Anspruch 1, wobei das Ermitteln einer ersten Quer-/Hochformatausrichtung des elektronischen Geräts, die basierend auf einer Gesichtsrichtung bestimmt wird, umfasst:
Erfassen der Gesichtsrichtung, die basierend auf von einer Frontkamera gesammelten Bilddaten erkannt wird; und
Bestimmen der ersten Quer-/Hochformatausrichtung basierend auf einem eingeschlossenen Winkel α zwischen der Gesichtsrichtung und einer natürlichen Richtung des elektronischen Geräts, wobei
die natürliche Richtung des elektronischen Geräts eine Richtung von einem unteren Ende des elektronischen Geräts zu einem oberen Ende ist, und das obere Ende ein Ende ist, an dem sich die Frontkamera und eine Rückkamera befinden.

3. Verfahren nach Anspruch 2, wobei das Bestimmen der ersten Quer-/Hochformatausrichtung basierend auf einem eingeschlossenen Winkel zwischen der Gesichtsrichtung und einer natürlichen Richtung des elektronischen Geräts umfasst:
wenn α∈ (0°-β, 0°+β) ist, die erste Quer-/Hochformatausrichtung eine Hochformatausrichtung bei 0° ist;
wenn α∈ (90°-β, 90°+β) ist, die erste Quer-/Hochformatausrichtung eine Querformatausrichtung bei 90° ist;
wenn α∈ (180°-β, 180°+β) ist, die erste Quer-/Hochformatausrichtung eine Hochformatausrichtung bei 180° ist; oder
wenn α∈ (270°-β, 270°+(3) ist, die erste Quer-/Hochformatausrichtung eine Querformatausrichtung bei 270° ist, wobei
β einen Richtungserkennungsschwellenwert angibt und β größer als 0° und kleiner als 45° ist.

4. Verfahren nach Anspruch 3, wobei das Bestimmen der ersten Quer-/Hochformatausrichtung basierend auf einem eingeschlossenen Winkel zwischen der Gesichtsrichtung und einer natürlichen Ausrichtung des elektronischen Geräts ferner Folgendes umfasst:
wenn α∈ [β, 90°-β], α∈ [90°+β, 180°-β], α∈ [180°+β, 270°-β] oder α∈ [270°+β, 360°-β], zeigt ein Wert der ersten Quer-/Hochformatausrichtung unbekannt an.

5. Verfahren nach Anspruch 3 oder 4, wobei eine Winkelauflösung, mit der eine von dem elektronischen Gerät verwendete Chiplattform eine Gesichtsrichtungserkennung durchführt, 30° beträgt und β=30° ist.

6. Verfahren nach Anspruch 2, ferner umfassend:
Erhalten der von der Frontkamera erfassten Bilddaten, wenn sich das elektronische Gerät im Querformat-Seitenstand befindet oder in diesen eintritt; und
Durchführen einer Gesichtsrichtungserkennung basierend auf den Bilddaten.

7. Verfahren nach Anspruch 6, wobei das Durchführen der Gesichtsrichtungserkennung basierend auf den Bilddaten Folgendes umfasst:
wenn nur ein Gesicht basierend auf den Bilddaten erkannt wird, Durchführen der Gesichtsrichtungserkennung für das eine Gesicht.

8. Verfahren nach Anspruch 7, ferner umfassend:
wenn basierend auf den Bilddaten kein Gesicht oder mehrere Gesichter erkannt werden, oder wenn ein Fehler bei der Erkennung vorliegt, Bestimmen, dass ein Wert der ersten Quer-/Hochformatausrichtung unbekannt anzeigt.

9. Verfahren nach Anspruch 4 oder 8, ferner umfassend:
wenn der Wert der ersten Quer-/Hochformatausrichtung unbekannt anzeigt, Beibehalten einer aktuellen Bildschirmanzeigeausrichtung des elektronischen Geräts.

10. Verfahren nach Anspruch 3, ferner umfassend:
wenn die erste Quer-/Hochformatausrichtung eine Querformatausrichtung ist, Beibehalten einer aktuellen Bildschirmanzeigeausrichtung des elektronischen Geräts, wobei
die Querformatausrichtung die Querformatausrichtung bei 90° und die Querformatausrichtung bei 270° umfasst.

11. Verfahren nach Anspruch 6, wobei das Erhalten der von der Frontkamera erfassten Bilddaten, wenn sich das elektronische Gerät in einem Querformat-Seitenstand befindet oder in diesen eintritt, Folgendes umfasst:
wenn sich das elektronische Gerät im Querformat-Seitenstand befindet oder in diesen eintritt und in einem aktuellen Szenario eine Anforderung zur automatischen Quer-/Hochformatdrehung besteht, Erhalten der von der Frontkamera erfassten Bilddaten.

12. Verfahren nach Anspruch 6 oder 11, wobei die von der Frontkamera erfassten Bilddaten in einer Echtzeit-Abtastweise erhalten werden.

13. Elektronisches Gerät (100), umfassend:
einen oder mehrere Prozessoren (110);
einem Speicher; und
einem oder mehreren Computerprogrammen, wobei das eine oder die mehreren Computerprogramme in dem Speicher gespeichert sind und wobei, wenn die Computerprogramme von dem einen oder den mehreren Prozessoren ausgeführt werden, die elektronische Vorrichtung (100) dazu befähigt ist, das Anzeigeverfahren nach einem der Ansprüche 1-12 durchzuführen.

14. Computerlesbares Speichermedium, umfassend ein Computerprogramm, wobei, wenn das Computerprogramm auf einer elektronischen Vorrichtung ausgeführt wird, die elektronische Vorrichtung dazu befähigt ist, das Anzeigeverfahren nach einem der Ansprüche 1-12 durchzuführen.

## Revendications

1. Procédé d'affichage, appliqué à un dispositif électronique, et comprenant :
l'obtention, lorsque le dispositif électronique est dans ou entre dans un état de maintien latéral en mode paysage, d'une première orientation paysage/portrait du dispositif électronique déterminée sur la base d'une orientation du visage ; et
si la première orientation paysage/portrait est une orientation portrait, le réglage d'une orientation d'affichage d'écran du dispositif électronique sur un affichage portrait,
dans lequel l'état de maintien latéral en mode paysage comprend un état paysage et un état de maintien latéral, dans lequel l'état de maintien latéral est un état dans lequel un écran d'affichage du dispositif électronique est perpendiculaire au sol,
dans lequel le procédé comprend en outre :
lorsque le dispositif électronique quitte l'état de maintien latéral en mode paysage ou est dans un état non latéral en mode paysage, l'obtention d'une seconde orientation paysage/portrait du dispositif électronique déterminée sur la base d'une direction de gravité ; et
la détermination de l'orientation d'affichage d'écran du dispositif électronique sur la base de la seconde orientation paysage/portrait.

2. Procédé selon la revendication 1, dans lequel l'obtention d'une première orientation paysage/portrait du dispositif électronique déterminée sur la base d'une orientation du visage comprend :
l'obtention de l'orientation du visage reconnue sur la base de données d'image collectées par une caméra frontale ; et
la détermination de la première orientation paysage/portrait sur la base d'un angle inclus α entre l'orientation du visage et une orientation naturelle du dispositif électronique, dans lequel
l'orientation naturelle du dispositif électronique est une direction allant d'une extrémité inférieure du dispositif électronique à une extrémité supérieure, et l'extrémité supérieure est une extrémité où la caméra frontale et une caméra arrière sont situées.

3. Procédé selon la revendication 2, dans lequel la détermination de la première orientation paysage/portrait sur la base d'un angle inclus entre l'orientation du visage et une orientation naturelle du dispositif électronique comprend :
lorsque α ∈ (0°-β, 0°+β), la première orientation paysage/portrait est une orientation portrait à 0° ;
lorsque α∈ (90°-β, 90°+β), la première orientation paysage/portrait est une orientation paysage à 90° ;
lorsque α∈ (180°-β, 180°+β), la première orientation paysage/portrait est une orientation portrait à 180° ; ou
lorsque α∈ (270°-β, 270°+β), la première orientation paysage/portrait est une orientation paysage à 270°, dans lequel
β indique un seuil de plage de reconnaissance d'orientation, et β est supérieur à 0° et inférieur à 45°.

4. Procédé selon la revendication 3, dans lequel la détermination de la première orientation paysage/portrait basée sur un angle inclus entre la direction du visage et une direction naturelle du dispositif électronique comprend en outre :
lorsque α∈ [β, 90°-β], α∈ [90°+β, 180°-β], α∈ [180°+β, 270°-β], ou α∈ [270°+β, 360°-β], une valeur de la première orientation paysage/portrait indique inconnu.

5. Procédé selon la revendication 3 ou 4, dans lequel une résolution angulaire à laquelle une plateforme de puce utilisée par le dispositif électronique effectue la reconnaissance de la direction du visage est de 30°, et β=30°.

6. Procédé selon la revendication 2, comprenant en outre :
l'obtention, lorsque le dispositif électronique est dans ou entre dans l'état de positionnement latéral paysage, des données d'image collectées par la caméra frontale ; et
l'exécution d'une reconnaissance de la direction du visage basée sur les données d'image.

7. Procédé selon la revendication 6, dans lequel l'exécution de la reconnaissance de la direction du visage basée sur les données d'image comprend :
si un seul visage est reconnu sur la base des données d'image, l'exécution d'une reconnaissance de la direction du visage sur ce visage.

8. Procédé selon la revendication 7, comprenant en outre :
si aucun visage n'est reconnu ou si une pluralité de visages sont reconnus sur la base des données d'image, ou s'il y a une anomalie dans la reconnaissance, la détermination qu'une valeur de la première orientation paysage/portrait indique inconnu.

9. Procédé selon la revendication 4 ou 8, comprenant en outre :
si la valeur de la première orientation paysage/portrait indique inconnu, le maintien d'une direction d'affichage d'écran actuelle du dispositif électronique.

10. Procédé selon la revendication 3, comprenant en outre :
si la première orientation paysage/portrait est une orientation paysage, le maintien d'une direction d'affichage d'écran actuelle du dispositif électronique, dans lequel
l'orientation paysage comprend l'orientation paysage à 90° et l'orientation paysage à 270°.

11. Procédé selon la revendication 6, dans lequel l'obtention, lorsque le dispositif électronique est dans ou entre dans un état de positionnement latéral paysage, des données d'image collectées par la caméra frontale comprend :
lorsque le dispositif électronique est dans ou entre dans l'état de positionnement latéral paysage, et qu'il existe une exigence de rotation automatique paysage/portrait dans un scénario actuel, l'obtention des données d'image collectées par la caméra frontale.

12. Procédé selon la revendication 6 ou 11, dans lequel les données d'image collectées par la caméra frontale sont obtenues selon un mode d'échantillonnage en temps réel.

13. Dispositif électronique (100), comprenant :
un ou plusieurs processeurs (110) ;
une mémoire ; et
un ou plusieurs programmes informatiques, dans lequel le ou les programmes informatiques sont stockés dans la mémoire, et lorsque les programmes informatiques sont exécutés par le ou les processeurs, le dispositif électronique (100) est habilité à exécuter le procédé d'affichage selon l'une quelconque des revendications 1 à 12.

14. Support de stockage lisible par ordinateur, comprenant un programme informatique, dans lequel lorsque le programme informatique est exécuté sur un dispositif électronique, le dispositif électronique est habilité à exécuter le procédé d'affichage selon l'une quelconque des revendications 1 à 12.
